# EUROPEAN PATENT APPLICATION

(11) **EP 4 750 200 A1**
(43) Date of publication of application: **27.05.2026**
(21) Application number: 24850877.2
(22) Date of filing: 31.07.2024
(51) Int. Cl.: H04W 72/23

(54) **COMMUNICATION METHOD AND APPARATUS**

(30) Priority: 10.08.2023 CN 202311010394; 15.09.2023 CN 202311201007
(71) Applicant: HUAWEI TECHNOLOGIES CO., LTD., Shenzhen 518129 (CN)
(72) Inventor: ZHANG, Mengchen, Shenzhen, Guangdong 518129 (CN); XU, Haibo, Shenzhen, Guangdong 518129 (CN); GUO, Yinghao, Shenzhen, Guangdong 518129 (CN); YAO, Chuting, Shenzhen, Guangdong 518129 (CN)
(74) Representative: Gill Jennings & Every LLP
(86) International application number: PCT/CN2024/108882
(87) International publication number: WO 2025/031232

(57) **Abstract**

A communication method and apparatus are provided. The method includes: receiving first information, where the first information indicates at least one first resource, and the first resource is used for transmission of a first scheduling request SR; and sending the first SR to a network device on the first resource, where the first SR is used to request a second resource for transmission of an SL-PRS, and the SL-PRS is used for sidelink positioning. According to the method, the at least one first resource is pre-configured for the terminal device based on the first information. When the terminal device has the SL-PRS to be transmitted, the terminal device may send the first SR to the network device on the first resource, and the terminal device may request, from the network device via the first SR, the resource for transmission of the SL-PRS, so that transmission of the SL-PRS can be implemented, transmission efficiency of the SL-PRS can be improved, and positioning accuracy can be ensured.

## Description

### CROSS-REFERENCE TO RELATED APPLICATIONS

This application claims priorities to Chinese Patent Application No. 202311010394.4, filed with the China National Intellectual Property Administration on August 10, 2023, and entitled "COMMUNICATION METHOD AND APPARATUS", and to Chinese Patent Application No. 202311201007.5, filed with the China National Intellectual Property Administration on September 15, 2023, and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

In wireless communication systems, a target (target) user equipment (user equipment, UE) may be positioned by using sidelink positioning technologies, allowing network elements, UEs, or entities that request a location service to obtain a location of the target UE.

In sidelink positioning technologies, the UE needs to transmit sidelink positioning-related reference signals. However, how the UE obtains resources for transmission of the sidelink positioning-related reference signals is an urgent problem to be resolved.

### SUMMARY

This application provides a communication method and apparatus, to provide a solution that allows a terminal device to update its capabilities when those capabilities change.

According to a first aspect, this application provides a communication method. The method includes: receiving first information, where the first information indicates at least one first resource, and the first resource is used for transmission of a first scheduling request SR; and sending the first SR to a network device on the first resource, where the first SR is used to request a second resource for transmission of a sidelink positioning reference signal SL-PRS, and the SL-PRS is used for sidelink positioning.

According to a second aspect, this application provides a communication method. The method includes: sending first information to a terminal device, where the first information indicates at least one first resource, and the first resource is used for transmission of a first scheduling request SR; and receiving the first SR from the terminal device on the first resource, where the first SR is used to request a second resource for transmission of a sidelink positioning reference signal SL-PRS, and the SL-PRS is used for sidelink positioning.

In the foregoing methods, the at least one first resource is pre-configured for the terminal device based on the first information. When the terminal device has the SL-PRS to be transmitted, the terminal device may send the first SR to the network device on the first resource, and the terminal device may request, from the network device via the first SR, the resource for transmission of the SL-PRS, so that transmission of the SL-PRS can be implemented, transmission efficiency of the SL-PRS can be improved, and positioning accuracy can be ensured.

With reference to the first aspect or the second aspect, in an implementation, the first information further indicates one or more of the following:
SL-PRS resource pool information corresponding to each of the at least one first resource, SL-PRS bandwidth information corresponding to each of the at least one first resource, information about a quantity of symbols for the SL-PRS corresponding to each of the at least one first resource, or location service requirement information corresponding to each of the at least one first resource.

In the foregoing method, the first information further indicates the SL-PRS resource pool information corresponding to each first resource, so that the terminal device can determine the resource pool corresponding to each first resource. The terminal device can select, from the at least one first resource based on a resource pool required by the resource for transmission of the SL-PRS, a first resource corresponding to the resource pool, so that the terminal device can obtain the resource for transmission of the SL-PRS from the required resource pool. The first information further indicates the SL-PRS bandwidth information and/or the information about the quantity of symbols for the SL-PRS corresponding to each first resource, so that the terminal device can determine a bandwidth and/or a quantity of symbols corresponding to each first resource. The terminal device can select, from the at least one first resource based on a bandwidth and/or a quantity of symbols that are/is required by the resource for transmission of the SL-PRS, a first resource corresponding to the bandwidth and/or the quantity of symbols, so that the terminal device can obtain sufficient resources for transmission of the SL-PRS. The first information further indicates the location service requirement information corresponding to each first resource. The terminal device may select, from the at least one first resource based on location service requirement information of a location service, a first resource corresponding to the location service requirement information, so that the SL-PRS transmitted by the terminal device meets the location service requirement information.

With reference to the first aspect or the second aspect, in an implementation, the SL-PRS resource pool information, SL-PRS bandwidth information, the information about the quantity of symbols for the SL-PRS, and the location service requirement information corresponding to any two of the at least one first resource are not completely identical.

With reference to the first aspect or the second aspect, in an implementation, the method further includes: determining, in the at least one first resource based on the SL-PRS, the first resource used to send the first SR, where the SL-PRS and the first resource used to send the first SR meet at least one of the following: a resource pool to which the resource used for transmission of the SL-PRS belongs is the same as a resource pool indicated by the SL-PRS resource pool information corresponding to the first resource; a bandwidth required for a location service corresponding to the SL-PRS is less than or equal to a bandwidth indicated by the SL-PRS bandwidth information corresponding to the first resource; a quantity of symbols required for the location service corresponding to the SL-PRS is less than or equal to a quantity of symbols that is indicated by information about the quantity of symbols for the SL-PRS corresponding to the first resource; or location service requirement information required for the location service corresponding to the SL-PRS is the same as the location service requirement information corresponding to the first resource.

With reference to the second aspect, in an implementation, the method further includes: receiving a first sidelink grant from the network device, where the first sidelink grant indicates the second resource; and sending the SL-PRS on the second resource indicated by the first sidelink grant.

With reference to the second aspect, in an implementation, the method further includes: sending a first sidelink grant to the terminal device based on the first SR, where the first sidelink grant indicates the second resource.

With reference to the first aspect, in an implementation, the method further includes: receiving a measurement result, where the measurement result is determined based on the SL-PRS; and performing positioning based on the measurement result.

With reference to the first aspect or the second aspect, in an implementation, that the first information indicates the first resource includes: the first information indicates one or more of the following: time domain information of the first resource; frequency domain information of the first resource; identification information of the first SR; resource identification information of the first resource; periodicity information of the first resource; symbol offset information of the first resource; or slot offset information of the first resource.

In the foregoing method, when the at least one first resource is configured based on the first information, information such as time domain information, frequency domain information, and periodicity information corresponding to each first resource is further indicated, so that the terminal device can determine related information of each first resource, and the terminal device can select, from the at least one first resource based on an actual situation, a first resource actually used for transmission of the first SR, to improve flexibility of sending the first SR by the terminal device.

With reference to the first aspect, in an implementation, before the receiving the first information, the method further includes:
sending second information to the network device, where the second information indicates one or more of the following: bandwidth information required for the location service, information about the quantity of symbols required for the location service, positioning quality of service of the location service, or an identifier of the location service.

With reference to the second aspect, in an implementation, before the sending the first information, the method further includes: receiving second information, where the second information indicates one or more of the following: bandwidth information required for the location service, information about the quantity of symbols required for the location service, positioning quality of service of the location service, or an identifier of the location service.

With reference to the first aspect, in an implementation, the method further includes: receiving third information from the network device, where the third information indicates one or more of the following: a correspondence between the location service requirement information and an SL-PRS bandwidth, a correspondence between the location service requirement information and the quantity of symbols for the SL-PRS, or a correspondence between the quality of service of the location service and the location service information.

With reference to the first aspect, in an implementation, before the sending the first SR to the network device on the first resource, the method further includes: if determining that no resource is available for transmission of the SL-PRS, triggering the first SR.

With reference to the first aspect, in an implementation, the method further includes: determining to perform a positioning procedure, and determining to send the SL-PRS; or receiving positioning indication information, and determining to send the SL-PRS, where the positioning indication information requests to send the SL-PRS.

With reference to the first aspect, in an implementation, after the sending the first SR to the network device on the first resource, the method further includes: canceling the triggered first SR.

With reference to the first aspect, in an implementation, the method further includes: receiving resource indication information from the network device, where the resource indication information indicates a third resource used for transmission of data; and if the third resource is capable of carrying the data and the SL-PRS, canceling the triggered first SR.

In the foregoing method, after the terminal device sends the first SR or the SL-PRS, or when the terminal device determines that the third resource can be used for transmission of the SL-PRS, the terminal device no longer needs a resource for transmission of the SL-PRS. Therefore, the terminal device cancels the triggered first SR. This can avoid a waste of resources and improve resource utilization.

With reference to the first aspect, in an implementation, before the receiving the first information, the method further includes: sending fourth information to the network device, where the fourth information indicates that a location service needs to be performed.

According to a third aspect, this application provides a communication method. The method includes: determining to send a sidelink positioning reference signal SL-PRS; and if no resource is available for transmission of the SL-PRS, triggering first request information; if a resource is available for transmission of the first request information, sending the first request information, where the first request information is used to request a resource for transmission of the SL-PRS; or if no resource is available for transmission of the first request information, triggering a second scheduling request, where the second scheduling request is used to request an uplink resource.

According to a fourth aspect, this application provides a communication method. The method includes: receiving first request information or a second scheduling request from a terminal device, where the first request information is used to request a resource for transmission of a sidelink positioning reference signal SL-PRS, and the second scheduling request is used to request an uplink resource; and sending a second sidelink grant to the terminal device based on the first request information, or sending a third sidelink grant to the terminal device based on the second scheduling request, where the second sidelink grant indicates a resource used for transmission of the SL-PRS, and the third sidelink grant indicates an uplink resource or a sidelink resource.

In the foregoing methods, the first request information and the second scheduling request that are used to request the SL-PRS transmission resource are provided, so that the terminal device can request, via the first request information or the second scheduling request, the network device for the resource for transmission of the SL-PRS when needing to perform transmission of the SL-PRS. In this way, transmission of the SL-PRS can be implemented, SL-PRS transmission efficiency can be improved, and positioning accuracy can be ensured.

With reference to the third aspect or the fourth aspect, in an implementation, the first request information indicates one or more of the following: positioning quality of service QoS corresponding to the SL-PRS, an index of a location service corresponding to the SL-PRS, an identifier of the location service corresponding to the SL-PRS, a size of the SL-PRS, a bandwidth information of a resource used for transmission of the SL-PRS, information about a quantity of symbols of the resource used for transmission of the SL-PRS, or identification information of a terminal device that receives the SL-PRS.

With reference to the third aspect or the fourth aspect, in an implementation, the first request information is carried in a medium access control control element.

With reference to the third aspect or the fourth aspect, in an implementation, a priority of the first request information is higher than a priority of a sidelink buffer status report, and the sidelink buffer status report is used to request a sidelink resource for transmission of data.

With reference to the third aspect, in an implementation, the determining to send the SL-PRS includes: determining to perform a positioning procedure, and determining to send the SL-PRS; or receiving positioning indication information, and determining to send the SL-PRS based on the positioning indication information, where the positioning indication information requests to send the SL-PRS.

With reference to the third aspect, in an implementation, the method further includes: receiving a second sidelink grant, where the second sidelink grant indicates a resource used for transmission of the SL-PRS; and performing transmission of the SL-PRS on the resource indicated by the second sidelink grant.

With reference to the third aspect, in an implementation, the method further includes: canceling the triggered first request information.

With reference to the third aspect, in an implementation, after the sending the first request information, the method further includes: canceling the triggered first request information.

In the foregoing method, after the terminal device sends the first request information or the SL-PRS, or when the terminal device determines that the third resource can be used for transmission of the SL-PRS, the terminal device no longer needs a resource for transmission of the SL-PRS. Therefore, the terminal device cancels the triggered first request information. This can avoid a waste of resources and improve resource utilization.

With reference to the third aspect, in an implementation, the method further includes: receiving resource indication information from the network device, where the resource indication information indicates a resource used for transmission of data; and if the resource indicated by the resource indication information is capable of carrying the data and the SL-PRS, canceling the triggered first request information.

According to a fifth aspect, this application provides a communication method. The method includes: receiving first indication information, where the first indication information indicates to activate or deactivate a first group of sidelink resources in N groups of periodic sidelink resources, the first group of sidelink resources are used for transmission of a sidelink reference signal SL-PRS, N is an integer greater than 0, and the N groups of sidelink resources are configured by a network device; and
activating or deactivating the first group of sidelink resources based on the first indication information.

According to a sixth aspect, this application provides a communication method. The method includes: determining to activate or deactivate a first group of sidelink resources in N groups of periodic sidelink resources, the N groups of sidelink resources are configured by a network device, the first group of sidelink resources are used for transmission of a sidelink reference signal SL-PRS, and N is an integer greater than 0; and sending the first indication information, where the first indication information indicates to activate or deactivate the first group of sidelink resources in the N groups of periodic sidelink resources.

According to the methods provided in this application, when the network device schedules the N groups of sidelink resources for the terminal device to perform transmission of the SL-PRS, the terminal device may through the second indication information, so that the network device determines whether the terminal device successfully activates or deactivates the configured sidelink resource. This avoids a transmission conflict caused when the network device deactivates a group of sidelink resources for the terminal device but the terminal device cannot deactivate the group of sidelink resources and continues using the group of sidelink resources, or avoids a resource waste caused when the network device activates a group of sidelink resources for the terminal device but the terminal device cannot activate the group of sidelink resources.

With reference to the fifth aspect or the sixth aspect, in an implementation, that the first indication information indicates to activate or deactivate the first group of sidelink resources in the N groups of periodic sidelink resources includes: the first indication information includes X bits, where X is an integer greater than 0; and if a value of the X bits is a first value, the first indication information indicates to activate the first group of sidelink resources; or if a value of the X bits is a second value, the first indication information indicates to deactivate the first group of sidelink resources.

With reference to the fifth aspect or the sixth aspect, in an implementation, that the first indication information indicates to activate or deactivate the first group of sidelink resources in the N groups of periodic sidelink resources includes:
the first indication information includes a first field, where if a value of at least one bit in the first field is a third value, the first indication information indicates to activate the first group of sidelink resources; if the value of the at least one bit in the first field is a fourth value, the first indication information indicates to deactivate the first group of sidelink resources; and the first field is at least one of the following: an SL-PRS resource identifier field, a comb size field, a resource element offset field, a resource pool index field, a start symbol field, or a quantity of symbols for the SL-PRS field.

With reference to the fifth aspect or the sixth aspect, in an implementation, the method further includes: triggering second indication information; and/or
sending the second indication information, where the second indication information indicates to confirm activation or deactivation of the first group of sidelink resources.

With reference to the fifth aspect or the sixth aspect, in an implementation, the second indication information includes N bits, and the N bits are in one-to-one correspondence with the N groups of sidelink resources; and when the second indication information indicates to confirm activation of the first group of sidelink resources, a value of a bit that is in the second indication information and that is corresponding to the first group of sidelink resources is a fifth value; or when the second indication information indicates to confirm deactivation of the first group of sidelink resources, a value of a bit that is in the second indication information and that is corresponding to the first group of sidelink resources is a sixth value.

With reference to the fifth aspect or the sixth aspect, in an implementation, the second indication information is carried in a medium access control MAC control element CE, and an index value corresponding to a logical channel identifier of the MAC CE is a first index value.

With reference to the fifth aspect or the sixth aspect, in an implementation, the first indication information further indicates to activate or deactivate a second group of sidelink resources in the N groups of sidelink resources; the first group of sidelink resources and the second group of sidelink resources that are activated or deactivated based on the first indication information include a sidelink resource corresponding to a shared resource pool and a sidelink resource corresponding to a sidelink positioning reference signal SL-PRS dedicated resource pool, and the second indication information indicates to confirm activation or deactivation of the sidelink resource corresponding to the SL-PRS dedicated resource pool and/or the sidelink resource corresponding to the shared resource pool in the first group of sidelink resources and the second group of sidelink resources; or the first indication information indicates that the activated or deactivated first group of sidelink resources and second group of sidelink resources are sidelink resources corresponding to an SL-PRS dedicated resource pool, and the second indication information indicates to confirm activation or deactivation of the sidelink resource corresponding to the SL-PRS dedicated resource pool.

With reference to the fifth aspect or the sixth aspect, in an implementation, if the first group of sidelink resources are resources in a shared resource pool, the first indication information is scrambled with a first radio network temporary identity RNTI; or if the first group of sidelink resources are resources in an SL-PRS dedicated resource pool, the first indication information is scrambled with a second RNTI.

With reference to the fifth aspect or the sixth aspect, in an implementation, if the first group of sidelink resources are resources in the shared resource pool, the first indication information is carried in downlink control information DCI in a first format; or if the first group of sidelink resources are resources in the SL-PRS dedicated resource pool, the first indication information is carried in DCI in a second format.

With reference to the fifth aspect, in an implementation, the method further includes:
receiving first configuration information, where the first configuration information indicates the N groups of sidelink resources, and N is an integer greater than 0.

With reference to the sixth aspect, in an implementation, the method further includes:
sending first configuration information, where the first configuration information indicates the N groups of sidelink resources, and N is an integer greater than 0.

With reference to the fifth aspect or the sixth aspect, in an implementation, the method further includes:
determining a third group of sidelink resources in at least one group of activated sidelink resources in the N groups of sidelink resources; and
sending the SL-PRS on the third group of sidelink resources.

According to a seventh aspect, a communication method is provided, including: determining second indication information; and
sending the second indication information, where the second indication information indicates to confirm activation or deactivation of a first group of sidelink resources in N groups of periodic sidelink resources, the first group of sidelink resources are used for transmission of a sidelink reference signal SL-PRS, the N groups of sidelink resources are configured by a network device, and N is an integer greater than 0.

According to an eighth aspect, this application further provides a communication apparatus. The communication apparatus can implement any method provided in any one of the first aspect to the seventh aspect. The communication apparatus may be implemented by hardware, or may be implemented by hardware executing corresponding software. The hardware or the software includes one or more units or modules corresponding to the foregoing functions.

In a possible implementation, the communication apparatus includes a processor. The processor is configured to support the communication apparatus in performing a corresponding function of the network device or the terminal device in the foregoing methods. The communication apparatus further includes a memory. The memory may be coupled to the processor, and stores program instructions and data that are necessary for the communication apparatus. Optionally, the communication apparatus further includes an interface circuit. The interface circuit is configured to support communication between the communication apparatus and a device like a terminal apparatus.

In a possible implementation, the communication apparatus includes corresponding functional modules separately configured to implement the steps in the foregoing methods. The function may be implemented by hardware, or may be implemented by hardware executing corresponding software. The hardware or software includes one or more modules corresponding to the foregoing functions.

In a possible implementation, a structure of the communication apparatus includes a processing unit and a transceiver unit. These units may perform corresponding functions in the foregoing method examples. For details, refer to the descriptions in the method provided in any one of the first aspect to the seventh aspect. Details are not described herein.

According to a ninth aspect, a communication apparatus is provided and includes a processor and an interface circuit. The interface circuit is configured to: receive a signal from a communication apparatus other than the communication apparatus, and transmit the signal to the processor, or send a signal from the processor to a communication apparatus other than the communication apparatus. The processor is configured to implement the method in any one of the possible implementations of the first aspect to the seventh aspect by using a logic circuit or by executing code instructions.

According to a tenth aspect, a communication apparatus is provided and includes a processor and an interface circuit. The interface circuit is configured to: receive a signal from a communication apparatus other than the communication apparatus, and transmit the signal to the processor, or send a signal from the processor to a communication apparatus other than the communication apparatus. The processor is configured to implement the functional modules of the method in any one of the possible implementations of the first aspect to the seventh aspect by using a logic circuit or by executing code instructions.

According to an eleventh aspect, a computer-readable storage medium is provided. The computer-readable storage medium stores a computer program or instructions. When the computer program or the instructions are executed by a processor, the method in any one of the possible implementations of the first aspect to the seventh aspect is implemented.

According to a twelfth aspect, a computer program product storing instructions is provided. When the instructions are run by a processor, the method in any one of the possible implementations of the first aspect to the seventh aspect is implemented.

According to a thirteenth aspect, a circuit is provided. The circuit is configured to perform the method in any one of the possible implementations of the first aspect to the seventh aspect, and the circuit may include a chip circuit. Optionally, the circuit may be further coupled to a memory.

According to a fourteenth aspect, a chip is provided. The chip includes a processor, configured to implement the method in any one of the possible implementations of the first aspect to the seventh aspect. Optionally, the chip may further include a memory. The chip may include a chip, or may include a chip and another discrete device.

According to a fifteenth aspect, an embodiment of this application further provides a communication system. The communication system includes a first apparatus configured to implement the method in the first aspect and any possible implementation of the first aspect, and a second apparatus configured to implement the method in the second aspect and any possible implementation of the second aspect.

According to a sixteenth aspect, an embodiment of this application further provides a communication system. The communication system includes a first apparatus configured to implement the method in the third aspect and any possible implementation of the third aspect, and a second apparatus configured to implement the method in the fourth aspect and any possible implementation of the fourth aspect.

According to a seventeenth aspect, an embodiment of this application further provides a communication system. The communication system includes a first apparatus configured to implement the method in the fifth aspect and any possible implementation of the fifth aspect, and a second apparatus configured to implement the method in the sixth aspect and any possible implementation of the sixth aspect.

### BRIEF DESCRIPTION OF DRAWINGS

FIG. 1(a) is a diagram of an architecture of a communication system to which an embodiment of this application is applied;
FIG. 1(b) is a diagram of an architecture of a network device to which an embodiment of this application is applied;
FIG. 2 is a schematic flowchart of a communication method according to an embodiment of this application;
FIG. 3 is a schematic flowchart of a communication method according to an embodiment of this application;
FIG. 4 is a schematic flowchart of a communication method according to an embodiment of this application;
FIG. 5 is a diagram of a structure of a communication apparatus according to an embodiment of this application;
FIG. 6 is a diagram of a structure of a communication apparatus according to an embodiment of this application; and
FIG. 7 is a diagram of a structure of a communication apparatus according to an embodiment of this application.

### DESCRIPTION OF EMBODIMENTS

A communication method provided in embodiments of this application may be applied to long term evolution (long term evolution, LTE) or a 5th generation (5th generation, 5G) communication system, for example, 5G new radio (new radio, NR), or may be applied to various future communication systems, for example, a 6th generation (6th generation, 6G) communication system. The communication method provided in embodiments of this application may be further applied to fields such as vehicle to everything (vehicle to everything, V2X) communication, internet of vehicles, autonomous driving, assisted driving, and the like.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may also be used.

In the specification and the accompanying drawings of embodiments of this application, terms such as "first" and "second" are intended to distinguish between different objects or distinguish between different processing on a same object. Words such as "first" and "second" may distinguish between same items or similar items that provide basically same functions and purposes. For example, a first device and a second device are merely intended to distinguish between different devices, and do not limit a sequence thereof. A person skilled in the art may understand that the terms such as "first" and "second" do not limit a quantity or an execution sequence, and the terms such as "first" and "second" do not indicate a definite difference. In addition, step numbers in embodiments described in this application are merely intended to distinguish between different steps, but are not intended to limit a sequence of the steps. For example, S101 may be performed before S102, may be performed after S102, or may be simultaneously performed with S102.

"At least one" means one or more, and "a plurality of" means two or more.

The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, the terms "including", "having", and any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner.

The method and an apparatus provided in embodiments of this application are based on a same or similar technical concept. Because problem resolving principles of the method and the apparatus are similar, mutual reference may be made to implementations of the apparatus and the method. Repeated descriptions are not described.

The following first describes some terms in embodiments of this application, to facilitate understanding of a person skilled in the art.

In embodiments of this application, a network device may be a device in a wireless network, and the network device may also be referred to as a network apparatus. For example, the network device may be a radio access network (radio access network, RAN) node that connects a terminal device to the wireless network, and may also be referred to as an access network device. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), or a baseband unit (baseband unit, BBU); an access point (access point, AP), a wireless relay node, a wireless backhaul node, a transmission point (transmission point, TP), a reception point (reception point, RP), or a transmission reception point (transmission reception point, TRP), or the like in a wireless fidelity (wireless fidelity, Wi-Fi) system; or may be a network device in a 5G mobile communication system, for example, a next generation NodeB (next generation NodeB, gNB), a transmission reception point (transmission reception point, TRP), or a TP in an NR system, or one antenna panel or one group of antenna panels (including a plurality of antenna panels) of the base station in the 5G mobile communication system. Alternatively, the network device may be a network node that forms a gNB or a transmission point, for example, a BBU or a distributed unit (distributed unit, DU).

In some deployments, the network device may include a central unit (centralized unit, CU) and a DU. The network device may further include an active antenna unit (active antenna unit, AAU). The CU implements a part of functions of the gNB, and the DU implements a part of the functions of the gNB. For example, the CU is responsible for processing a non-real-time protocol and service, and implements functions of a radio resource control (radio resource control, RRC) layer. The DU is responsible for processing a physical layer protocol and a real-time service, and implements functions of a radio link control (radio link control, RLC) layer, a medium access control (medium access control, MAC) layer, and a physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

The terminal device in embodiments of this application may be a wireless terminal device that can receive scheduling and indication information from the network device. The terminal device may be referred to as a terminal apparatus, and may also be referred to as a user equipment (user equipment, UE), a mobile station (mobile station, MS), a mobile terminal (mobile terminal, MT), or the like. The terminal device may be a device that includes a wireless communication function (providing voice/data connectivity for a user), for example, a handheld device, a vehicle-mounted device, or a vehicle-mounted module that has the wireless connection function. Currently, some examples of the terminal device are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in internet of vehicles, a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a device-to-device (device-to-device, D2D) communication terminal device, a vehicle to everything (vehicle to everything, V2X) communication terminal device, a smart vehicle, an invehicle infotainment system (or referred to as a vehicle-mounted sending unit) (telematics box, T-box), a machine-to-machine/machine-type communication (machine-to-machine/machine-type communication, M2M/MTC) terminal device, an internet of things (internet of things, IoT) terminal device, and the like. For example, the terminal device may be a vehicle-mounted device, an entire vehicle device, a vehicle-mounted module, a vehicle, an on board unit (on board unit, OBU), a roadside unit (roadside unit, RSU), a T-box, a chip, a system on chip (system on chip, SoC), or the like. The chip or the SoC may be mounted in the vehicle, the OBU, the RSU, or the T-box. The wireless terminal in the industrial control may be a camera, a robot, or the like. The wireless terminal in the smart home may be a television, an air conditioner, a sweeper, a speaker, a set-top box, or the like.

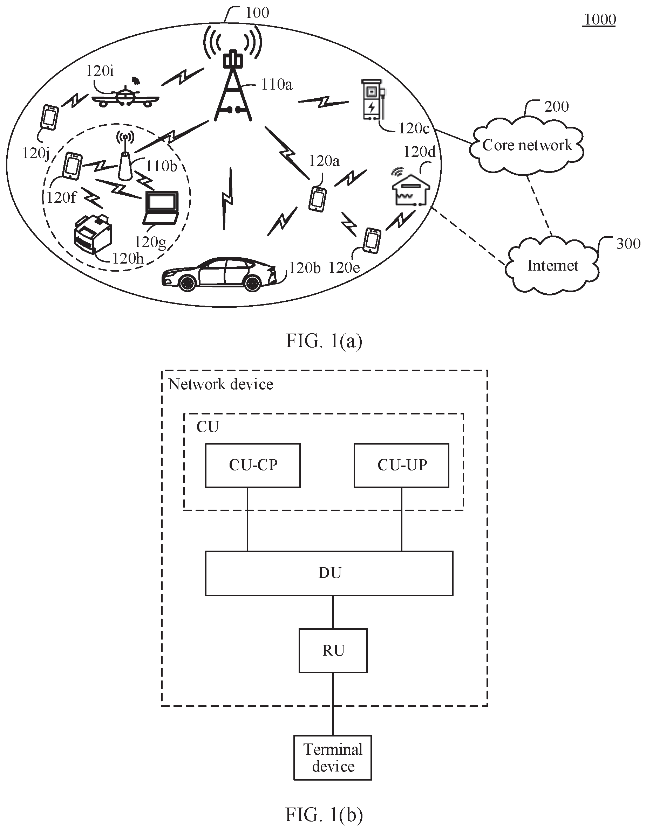

FIG. 1(a) is a diagram of an architecture of a communication system to which an embodiment of this application is applied. The communication system 1000 shown in FIG. 1(a) includes a radio access network 100 and a core network 200. Optionally, the communication system 1000 further includes an internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. A core network device and the network device may be different physical devices that are independent of each other; functions of the core network device and logical functions of the network device may be integrated into a same physical device; or a part of functions of the core network device and a part of functions of the network device may be integrated into one physical device. Terminal devices may be connected to each other in a wired manner or a wireless manner, and network devices may be connected to each other in a wired manner or a wireless manner. FIG. 1(a) is only a diagram. The communication system may further include another network device, for example, a wireless relay device and a wireless backhaul device, which are not shown in FIG. 1(a).

FIG. 1(b) is a diagram of a network device. As shown in FIG. 1(b), the network device includes one or more CUs, one or more DUs, and one or more radio units (radio units, RUs). For clarity, FIG. 1(b) shows only one CU, one DU, and one RU. The CU is configured to connect to a core network and the one or more DUs. Optionally, the CU may have a part of functions of the core network. The CU may include a CU control plane (control plane, CP) and a CU user plane (user plane, UP).

The CU and the DU may be configured based on functions, implemented by the CU and the DU, of protocol layers of a wireless network. For example, the CU is configured to implement functions of a packet data convergence protocol (packet data convergence protocol, PDCP) layer and an upper protocol layer (for example, a radio resource control (radio resource control, RRC) layer and/or a service data adaptation protocol (service data adaptation protocol, SDAP) layer), and the DU is configured to implement a function of a protocol layer (for example, a radio link control (radio link control, RLC) layer, a medium access control (medium access control, MAC) layer, and/or a physical (physical, PHY) layer) below the PDCP layer. For another example, the CU is configured to implement a function of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer.

The foregoing configuration of the CU and the DU is merely an example. Alternatively, functions of the CU and the DU may be configured as required. For example, the CU or the DU may be configured to have functions of more protocol layers, or the CU or the DU may be configured to have a part of processing functions of the protocol layers. For example, a part of functions of the RLC layer and a function of a protocol layer above the RLC layer are set on the CU, and a remaining function of the RLC layer and a function of a protocol layer below the RLC layer are set on the DU. For another example, division into functions of the CU or the DU may be performed based on service types or other system requirements. For example, division may be performed based on a delay. A function whose processing time needs to meet a requirement of a small delay is set on the DU, and a function whose processing time does not need to meet the delay requirement is set on the CU.

The DU and the RU may cooperate to jointly implement a function of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of functions is closer to the MAC layer. The lower-layer function of the physical layer may include another part of the functions of the physical layer, and the part of the functions is closer to an intermediate radio frequency side.

In current communication systems (for example, an NR system or an LTE system), a target UE may be positioned by using positioning technologies, allowing network elements, UEs, or entities that request a location service to obtain a location of the target UE. For example, the target UE may receive a PRS and/or send an SRS, and the target UE is positioned by using a positioning method supported by the NR system or the LTE system. The network element, the UE, or the entity that initiates the location service may include a location services (location services, LCS) server, a UE, a location client, an access and mobility management function (access and mobility management function, AMF), or the like. For example, the LCS may request a serving (serving) AMF of the target UE to position the target UE, and the positioning procedure may be referred to as a mobile terminated location request (mobile terminated location request, MT-LR); or a serving (serving) AMF of the target UE determines to position the target UE, and the process may be referred to as a network induced location request (network induced location request, NI-LR); or the target UE requests a location service from a serving (serving) AMF of the target UE, and the process may be referred to as a mobile originated location request (mobile originated location request, MO-LR).

There may be a plurality of positioning methods, for example, multi-round trip time (multi-round trip time, Multi-RTT) positioning, downlink time difference of arrival (downlink time difference of arrival, DL-TDOA) positioning, uplink time difference of arrival (uplink time difference of arrival, UL-TDOA) positioning, downlink angle of departure (downlink angle of departure, DL-AoD) positioning, uplink angle of arrival (uplink angle of arrival, UL-AoA) positioning, NR enhanced cell ID (NR enhanced cell ID, NR E-CID) positioning, motion sensor (motion sensor) positioning, terrestrial beacon system (terrestrial beacon system, TBS) positioning, Bluetooth (Bluetooth) positioning, wireless local area network (wireless local area network, WLAN) positioning, barometric pressure sensor (barometric pressure sensor) positioning, enhanced cell ID positioning, observed time difference of arrival (observed time difference of arrival, OTDOA) positioning, and network-assisted global navigation satellite system (global navigation satellite system, GNSS) positioning.

The positioning technologies further include sidelink (sidelink, SL) positioning. After the SL positioning is introduced, positioning scenarios may include "positioning of the target UE based on positioning reference signals (for example, PRS and/or SRS) of an interface (for example, Uu interface) between a terminal and a network device and a positioning reference signal of an interface (for example, PC5 interface) between terminals", and "positioning of the target UE based only on the positioning reference signal of the interface (for example, the PC5 interface) between the terminals". The SL positioning may be initiated by a UE or a network side. The UE in the SL positioning scenario may include one or more of the following: the target UE, an anchor (anchor) UE, and a server (server UE). The UEs may exchange information over sidelink, for example, the PC5 interface. The anchor UE may be understood as a UE configured to position the target UE. For example, the anchor UE may be understood as a UE that supports positioning of the target UE. For example, the anchor UE may support positioning of the target UE by sending and/or receiving a reference signal used for positioning. Optionally, the anchor UE may also be referred to as a located (located) UE or a reference (reference) UE. A location of the located UE is known or may be obtained through positioning, for example, through Uu positioning. The server UE may provide at least one of the following functions: positioning method determining, assistance data distribution, a location calculation function, location calculation based on an SL positioning and ranging service, and the like. The target UE or the anchor UE may alternatively serve as a server UE, or the server UE is a UE other than the target UE and the anchor UE.

In SL positioning scenarios, UEs are positioned using a sidelink positioning reference signal (for example, an SL-PRS). This application is described by using the SL-PRS as an example, but is not limited to the SL-PRS. The sidelink positioning reference signal may alternatively be a reference signal having a similar function. For example, the UE receives an SL-PRS sent by another UE. The UE may further measure the SL-PRS sent by the another UE, and obtain a measurement result. For example, each of positioning methods that can be used by the UE in the SL positioning scenarios corresponds to a measurement result. Optionally, a UE sending an SL-PRS may first determine configuration information or assistance data information of the SL-PRS, and send the SL-PRS based on the configuration information or the assistance data information of the SL-PRS. A UE receiving the SL-PRS may first obtain the configuration information or the assistance data information of the SL-PRS, and receive the SL-PRS based on the information.

In SL positioning, the UE may perform transmission of the SL-PRS on a resource in an SL-PRS dedicated resource pool; or the UE may perform transmission of the SL-PRS on a resource in a shared resource pool. The SL-PRS dedicated resource pool may be a resource pool specially used for transmission of the SL-PRS, and a resource in the shared resource pool may be used for transmission of both the SL-PRS and data. For example, when a resource pool for SL communication is used for transmission of the SL-PRS, transmission of the SL-PRS and data (the data may be communication data or a sidelink positioning protocol (sidelink positioning protocol, SLPP) message, which is not limited) is performed in a same resource pool. This application is described by using the SLPP as an example, but is not limited to the SLPP. The SLPP may alternatively be a protocol having a similar function.

Currently, in SL scenarios, a UE may perform transmission of data on a sidelink resource scheduled by a base station for the UE. This manner may be referred to as a resource allocation mode 1, a resource allocation scheme 1, or another resource allocation mode with a similar function. The resource allocation mode 1 is used as an example in this application for description. Therefore, in this application, according to a method, a UE may obtain a resource for transmission of an SL-PRS with the use of the resource allocation mode 1.

A network architecture and a service scenario described in embodiments of this application are intended to describe technical solutions in embodiments of this application more clearly, and do not constitute any limitation on the technical solutions provided in embodiments of this application. A person of ordinary skill in the art may know that: With evolution of the network architecture and emergence of new service scenarios, the technical solutions provided in embodiments of this application are also applicable to similar technical problems.

It may be understood that a specific structure of an execution body of the method provided in embodiments of this application is not particularly limited in this application. The method performed by the terminal device may be applied to the terminal device or a module or a chip in the terminal device, and the method performed by the network device may be applied to the network device or a module or a chip in the network device, provided that a program that records code of the method provided in embodiments of this application can be run to perform communication according to the method provided in embodiments of this application. Interaction between the terminal device and the network device is used as an example below for description.

It may be understood that a specific structure of an execution body of the method provided in embodiments of this application is not particularly limited in this application. The method may be applied to a first terminal device or a module or a chip in the first terminal device, provided that the program that records the code of the method provided in embodiments of this application can be run to perform communication according to the method provided in embodiments of this application. Interaction between the terminal device and the network device is used as an example below for description. The terminal device in the following procedure may be a target UE, an anchor UE, or a server UE in sidelink positioning, or is not limited thereto. The terminal device in the following procedure may be any UE that performs SL positioning.

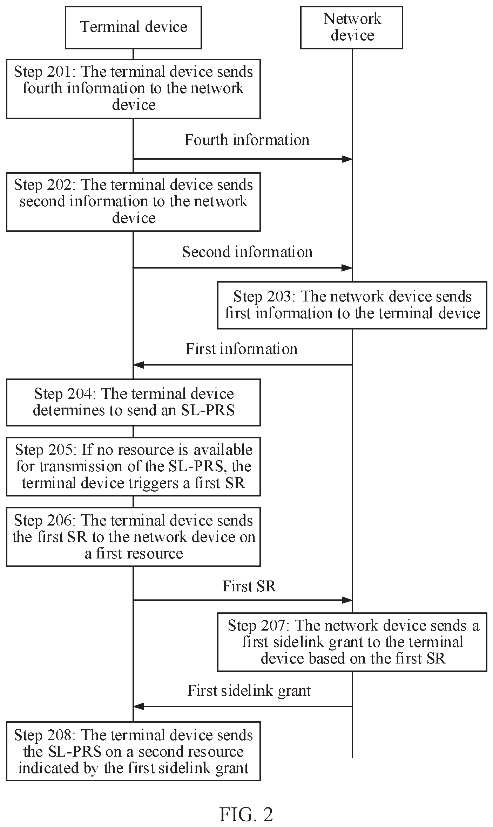

FIG. 2 is a schematic flowchart of a communication method according to an embodiment of this application. The method includes the following steps.

Step 201: A terminal device sends fourth information to a network device.

The fourth information indicates that a location service needs to be performed, or indicates that the terminal device requests the network device to configure a first SR. It may be understood that, in this application, the network device may configure the first SR for the terminal device based on the fourth information.

Correspondingly, the network device receives the fourth information from the terminal device.

The network device may determine, based on the fourth information, that the terminal device needs to perform the location service, and may further determine that the terminal device needs to perform transmission of an SL-PRS.

In an implementation, after receiving the fourth information, based on the fourth information, the network device may configure, for the terminal device, a resource used for transmission of the first SR or configure the first SR for the terminal device.

It should be noted that step 201 is an optional step, and the terminal device may not send the fourth information. Whether the terminal device sends the fourth information is not limited in this application.

Step 202: The terminal device sends second information to the network device.

Correspondingly, the network device receives the second information from the terminal device.

In a first implementation, the second information indicates at least one of the following information:
bandwidth information required for the location service or information about a quantity of symbols required for the location service.

In this application, the bandwidth information required for the location service indicates a bandwidth of the SL-PRS in the location service, and the bandwidth information required for the location service may also be referred to as bandwidth information of the SL-PRS; and the information about the quantity of symbols required for the location service indicates a quantity of symbols for the SL-PRS in the location service, and the information about the quantity of symbols required for the location service may also be referred to as information about the quality of symbols for the SL-PRS. The SL-PRS is used for sidelink positioning.

The symbol may be an orthogonal frequency division multiplexing (orthogonal frequency division multiplexing, OFDM) symbol, or may be a symbol similar to the OFDM symbol. This is not limited in this application.

In an implementation, the bandwidth information may be a specific value of the bandwidth, and the information about the quantity of symbols is a specific value of the quantity of symbols. For example, the bandwidth required for transmission of the SL-PRS in the location service by the terminal device is 10 MHz, and the quantity of symbols required for transmission of the SL-PRS is 5. In this case, the bandwidth information is 10 MHz, and the information about the quantity of symbols is 5.

In an implementation, each bandwidth value may correspond to one bandwidth index, and the bandwidth information may be the bandwidth index. Similarly, each quantity of symbols may correspond to one index of the quantity of symbols, and the information about the quantity of symbols may be the index of the quantity of symbols. For example, when the bandwidth value is 10 MHz, the bandwidth index is 1100; and when the quantity of symbols is 5, the symbol index is 101. If the bandwidth required for transmission of the SL-PRS by the terminal device is 10 MHz, and the quantity of symbols required for transmission of the SL-PRS is 5, the bandwidth information is 1100, and the information about the quantity of symbols is 101. Optionally, the network device may first configure a correspondence between the bandwidth and the bandwidth index for the terminal device, or may first configure a correspondence between the quantity of symbols and the index of the quantity of symbols for the terminal device. The terminal may determine, based on the correspondences, the index carried in the bandwidth information and the index carried in the information about the quantity of symbols.

In an implementation, each bandwidth value may correspond to one bandwidth identifier, and the bandwidth information may be the bandwidth identifier. Similarly, each quantity of symbols may correspond to one identifier of the quantity of symbols, and the information about the quantity of symbols may be the identifier of the quantity of symbols. For example, when the bandwidth value is 10 MHz, the bandwidth identifier is 01, or when the bandwidth value is 5 MHz, the bandwidth identifier is 02; and when the quantity of symbols is 5, the symbol identifier is 01, or when the quantity of symbols is 2, the symbol identifier is 02. If the bandwidth required for transmission of the SL-PRS by the terminal device is 10 MHz, and the quantity of symbols required for transmission of the SL-PRS is 5, the bandwidth information is 01, and the information about the quantity of symbols is 01. Optionally, the network device may first configure a correspondence between the bandwidth and the bandwidth identifier for the terminal device, or may first configure a correspondence between the quantity of symbols and the identifier of the quantity of symbols for the terminal device. The terminal may determine, based on the correspondences, the identifier carried in the bandwidth information and the identifier carried in the information about the quantity of symbols.

In an implementation, before the terminal device sends the second information, the network device may send third information to the terminal device. The third information indicates one or more of the following: a correspondence between location service requirement information and the bandwidth information of the SL-PRS or a correspondence between the location service requirement information and the information about the quantity of symbols for the SL-PRS.

The location service requirement information may indicate at least one of identification information of the location service or positioning quality of service (quality of service, QoS) information of the location service. The identification information of the location service may alternatively be replaced with an index of the location service. One location service may correspond to one piece of identification information or one index.

The positioning QoS information includes but is not limited to one or more of the following: horizontal accuracy (horizontal accuracy), vertical accuracy (vertical accuracy), response time (response time), a quality of service class (QoS class) of a location services (location services, LCS) server, horizontal or vertical distance accuracy, horizontal or vertical direction accuracy, or relative velocity accuracy. Optionally, the positioning QoS information may be at least one of a parameter included in positioning QoS and an identifier of the positioning QoS.

Alternatively, the positioning QoS information includes one or more of the following: horizontal accuracy (horizontal accuracy), vertical accuracy (vertical accuracy), response time (response time), a quality of service class (QoS class) of a location services (location services, LCS) server, horizontal or vertical distance accuracy, horizontal or vertical direction accuracy, relative velocity accuracy, or a range (range). The range indicates applicability of a QoS attribute in a ranging (ranging) or SL positioning operation over PC5. Optionally, the positioning QoS information may be at least one of a parameter included in positioning QoS and an identifier of the positioning QoS. For example, the positioning QoS information is the range. For another example, the positioning QoS information is the horizontal accuracy and the range. For another example, the positioning QoS information is a sum of the horizontal accuracy, the response time, and the relative velocity accuracy.

In this implementation, the second information may indicate the location service requirement information corresponding to the bandwidth information of the SL-PRS, to indirectly indicate the bandwidth information. The second information may indicate the location service requirement information corresponding to the information about the quantity of symbols for the SL-PRS, to indirectly indicate the information about the quantity of symbols.

For example, the correspondence indicated by the third information includes: For location service requirement information 1, a corresponding bandwidth is 10 MHz, and a corresponding quantity of symbols is 5; and for location service requirement information 2, a corresponding bandwidth is 20 MHz, and a corresponding quantity of symbols is 8.

If the bandwidth required for transmission of the SL-PRS by the terminal device is 10 MHz, and the quantity of symbols required for transmission of the SL-PRS is 5, the bandwidth information and the information about the quantity of symbols that are indicated by the second information are the location service requirement information 2. For example, the second information may indicate the location service requirement information 2, for example, at least one of location service identification information and positioning QoS information corresponding to the location service requirement information 2. In this way, the network device may determine, based on the second information and the correspondence indicated by the third information, the bandwidth information and/or the information about the quantity of symbols that are/is required for the location service.

In a second implementation, the second information indicates location service requirement information. The location service requirement information is information related to the location service of the terminal device. For example, the location service requirement information indicated by the second information includes at least one of the following:
bandwidth information required for the location service, information about a quantity of symbols required for the location service, positioning QoS of the location service, or an identifier or an index of the location service.

For the bandwidth information and the information about the quantity of symbols, refer to the foregoing descriptions. Details are not described herein again.

In an implementation, before the terminal device sends the second information, the network device may send third information to the terminal device. The third information indicates a correspondence between the location service information and one or more of the following: the bandwidth information of the SL-PRS, the information about the quantity of symbols for the SL-PRS, and the positioning QoS.

In this implementation, the second information may indicate the location service information corresponding to the bandwidth information of the SL-PRS, to indirectly indicate the bandwidth information. The second information may indicate the location service information corresponding to the information about the quantity of symbols for the SL-PRS, to indirectly indicate the information about the quantity of symbols. The second information may indicate the location service information corresponding to the positioning QoS, to indirectly indicate the positioning QoS.

For example, the location service information may be identification information of the location service. The terminal device may indicate the identification information of the location service via the second information. The network device may determine, based on the second information and the correspondence indicated by the third information, at least one of: the bandwidth information, the information about the quantity of symbols, and the positioning QoS that are required for the location service.

In this application, the second information may be included in an RRC message. For example, the RRC message is a sidelink terminal information (sidelinkUEinformation) message or a terminal assistance information (UEAssistanceInformation) message. The RRC message may alternatively be another message. This is not limited in embodiments of this application.

In some embodiments, step 202 is an optional step, and the terminal device may not send the second information. Whether the terminal device sends the second information is not limited in this application.

Step 203: The network device sends first information to the terminal device.

Correspondingly, the terminal device receives the first information from the network device.

Optionally, the first information may be included in an RRC message. For example, the RRC message is an RRC reconfiguration (RRCReconfiguration) message or another message having a similar function. This is not limited in this application.

The first information indicates at least one first resource. The first resource is used for transmission of the first SR. The first SR is used to request a second resource for transmission of the SL-PRS. In an implementation, the first resource is an uplink resource, and the second resource is a sidelink resource. The first resource may alternatively be a resource of another type.

In an implementation, the resource requested by using the first SR is used for transmission of an aperiodic SL-PRS.

In this application, that the network device sends the first information to the terminal device may be understood as that the network device configures, for the terminal device, information about a first SR corresponding to the terminal device, or may be understood as that the network device configures the information about the first SR at a granularity of the terminal device (per UE), or the network device configures the information about the first SR at a level of the terminal device, or the information about the first SR configured by the network device corresponds to the terminal device, or the network device configures the information about the first SR based on the terminal device. Optionally, the information about the first SR includes information about the resource used for transmission of the first SR by the terminal device.

In an implementation, the network device may configure first resources for a plurality of terminal devices, and first resources configured by the network device for different terminal devices may be the same or may be different. This is not limited in this application.

The first information indication may indicate the at least one first resource by indicating information related to the at least one first resource. For example, in an implementation, the first information may indicate one or more of the following:
time domain information corresponding to each of the at least one first resource, where for example, the time domain information may include time domain start location information, periodicity information, and the like;
frequency domain information corresponding to each of the at least one first resource, where for example, the frequency domain information may include physical resource block location information and the like;
identification information of a first SR corresponding to each of the at least one first resource, where for example, the identification information of the first SR may identify configuration information of the first SR, and identification information of one first SR may correspond to one set of configuration information of the first SR;
resource identification information corresponding to each of the at least one first resource, where for example, the resource identification information may identify a resource for transmission of the first SR, and one piece of resource identification information may correspond to one resource for transmission of a first SR, for example, the resource for transmission of the first SR includes information about a time domain resource and/or a frequency domain resource;
periodicity information corresponding to each of the at least one first resource, where for example, the periodicity information may be periodicity information of a resource for transmission of the first SR;
symbol offset information corresponding to each of the at least one first resource, where for example, the symbol offset information may indicate a start location of the first resource; or
slot offset information corresponding to each of the at least one first resource, where for example, the slot offset information may indicate a start location of the first resource.

In the foregoing method, when the at least one first resource is configured based on the first information, information such as time domain information, frequency domain information, and periodicity information corresponding to each first resource is further indicated, so that the terminal device can determine related information of each first resource, and the terminal device can select, from the at least one first resource based on an actual situation, a first resource actually used for transmission of the first SR, to improve flexibility of sending the first SR by the terminal device.

In addition to indicating the at least one first resource, the first information may further indicate other information. For example, in the first implementation, the first information may further indicate the following information: SL-PRS resource pool information corresponding to each of the at least one first resource. The SL-PRS resource pool information may alternatively be replaced with resource pool information of the SL-PRS, or information about a resource pool to which the resource for transmission of the SL-PRS belongs.

The SL-PRS resource pool information corresponding to the first resource may indicate at least one resource pool, and the resource requested by using the first SR carried on the first resource belongs to the at least one resource pool indicated by the SL-PRS resource pool information. When the network device receives the first SR on one first resource, a resource that is scheduled for the terminal device based on the first SR and that is used for transmission of the SL-PRS belongs to at least one resource pool indicated by SL-PRS resource pool information corresponding to the first resource.

Any two of the at least one first resource may correspond to same SL-PRS resource pool information or may correspond to different SL-PRS resource pool information. This is not limited in this application.

In this implementation the network device may configure, for the terminal device based on the first information, the resource pool to which the resource requested by using the first SR belongs. This may alternatively be understood as that the network device configures the information about the first SR for the terminal device at the granularity of the resource pool, or the network device configures the information about the first SR for the terminal device at the resource pool level, or the information about the first SR configured by the network device corresponds to the resource pool, or the network device configures the information about the first SR for the terminal device based on the resource pool. Optionally, the information about the first SR includes information about the resource used for transmission of the first SR by the terminal device.

That each resource pool configured by the network device for the terminal device has a corresponding first SR may alternatively be understood as that each first SR configured by the network device for the terminal device has corresponding resource pool information.

If each of the at least one first resource corresponds to SL-PRS resource pool information, there may be the following implementations.

Implementation 1: A resource pool indicated by the SL-PRS resource pool information corresponding to each of the at least one first resource may be an SL-PRS dedicated resource pool available to the terminal device. For example, an SL-PRS dedicated resource pool configured by the network device for the terminal device has a corresponding first SR. For example, all SL-PRS dedicated resource pools correspond to one first SR, or each SL-PRS dedicated resource pool corresponds to one first SR. Because transmission of one first SR is performed on one first resource, it may also be understood as that all the SL-PRS dedicated resource pools correspond to one first resource, or each SL-PRS dedicated resource pool corresponds to one first resource. For another example, the first SR configured by the network device for the terminal device corresponds to the SL-PRS dedicated resource pool. For example, one first SR corresponds to the SL-PRS dedicated resource pool, or each first SR corresponds to one SL-PRS dedicated resource pool. Because transmission of one first SR is performed on one first resource, it may also be understood as that one first resource corresponds to all the SL-PRS dedicated resource pools, or each first resource corresponds to one SL-PRS dedicated resource pool.

Implementation 2: A resource pool indicated by the SL-PRS resource pool information corresponding to each of the at least one first resource may be a shared resource pool available to the terminal device. For example, a shared resource pool configured by the network device for the terminal device has a corresponding first SR. For example, all shared resource pools correspond to one first SR, or each shared resource pool corresponds to one first SR. Because transmission of one first SR is performed on one first resource, it may also be understood as that all the shared resource pools correspond to one first resource, or each shared resource pool corresponds to one first resource. For another example, the first SR configured by the network device for the terminal device corresponds to the shared resource pool. For example, one first SR corresponds to all the shared resource pools, or each first SR corresponds to one shared resource pool. Because transmission of one first SR is performed on one first resource, it may also be understood as that one first resource corresponds to all the shared resource pools, or each first resource corresponds to one shared resource pool.

Implementation 3: A resource pool indicated by SL-PRS resource pool information corresponding to a part of the at least one first resource is an SL-PRS dedicated resource pool available to the terminal device, and a resource pool indicated by SL-PRS resource pool information corresponding to the other part of the at least one first resource is a shared resource pool available to the terminal device. For example, the network device configures two first resources for the terminal device based on the first information. A resource pool indicated by SL-PRS resource pool information corresponding to one first resource is an SL-PRS dedicated resource pool, and a resource pool indicated by SL-PRS resource pool information corresponding to the other first resource is a shared resource pool. If the terminal device needs to send the SL-PRS on a resource in the SL-PRS dedicated resource pool, the terminal device sends the first SR on the first resource corresponding to the SL-PRS dedicated resource pool, so that the network device can determine to schedule, from the SL-PRS dedicated resource pool for the terminal device, the resource used for transmission of the SL-PRS. If the terminal device needs to send the SL-PRS on a resource in the shared resource pool, the terminal device sends the first SR on the first resource corresponding to the shared resource pool, so that the network device can determine to schedule, from the shared resource pool for the terminal device, the resource used for transmission of the SL-PRS.

In the foregoing method, the first information further indicates the SL-PRS resource pool information corresponding to each first resource, so that the terminal device can determine the resource pool corresponding to each first resource. The terminal device can select, from the at least one first resource based on a resource pool required by the resource for transmission of the SL-PRS, a first resource corresponding to the resource pool, so that the terminal device can obtain the resource for transmission of the SL-PRS from the required resource pool.

In the second implementation, the first information may further indicate at least one of the following information:
SL-PRS bandwidth information corresponding to each of the at least one first resource, where the SL-PRS bandwidth information may be replaced with "bandwidth information of the SL-PRS", and the SL-PRS bandwidth information indicates a bandwidth; or
information about a quantity of symbols for the SL-PRS corresponding to each of the at least one first resource, where the information about the quantity of symbols for the SL-PRS may be replaced with "a quantity of symbols for the SL-PRS", and the information about the quantity of symbols for the SL-PRS indicates a quantity of symbols.

A bandwidth indicated by SL-PRS bandwidth information corresponding to a first resource may indicate a bandwidth of a resource that a first SR carried on the first resource requests for transmission of the SL-PRS. The terminal device may determine, based on a bandwidth of an SL-PRS that needs to be transmitted, a first resource corresponding to the bandwidth of the SL-PRS, to perform transmission of the first SR on the first resource. When the network device receives the first SR on the first resource, a bandwidth of a resource scheduled for the terminal device based on the first SR may be equal to the bandwidth indicated by the SL-PRS bandwidth information.

A bandwidth indicated by information about a quantity of symbols for the SL-PRS corresponding to one first resource may indicate that a first SR carried on the first resource is used to request a quantity of symbols of a resource used for transmission of the SL-PRS. The terminal device may determine, based on a quantity of symbols for an SL-PRS that needs to be transmitted, a first resource corresponding to the quantity of symbols for the SL-PRS, to perform transmission of the first SR on the first resource. When the network device receives the first SR on the first resource, a quantity of symbols of a resource scheduled for the terminal device based on the first SR may be equal to the quantity of symbols that is indicated by the information about the quantity of symbols for the SL-PRS.

Optionally, the foregoing bandwidth may be replaced with bandwidth information, and the bandwidth information indicates a value range of the bandwidth.

Optionally, the foregoing quantity of symbols may be replaced with information about a quantity of symbols, and the information about the quantity of symbols indicates a value range of the quantity of symbols.

The SL-PRS bandwidth information and the information about the quantity of symbols for the SL-PRS corresponding to any two of the at least one first resource may not be completely identical, or may be completely identical. This is not limited in this application.

How the SL-PRS bandwidth information specifically indicates the bandwidth and how the information about the quantity of symbols for the SL-PRS specifically indicates the quantity of symbols may be implemented in the following manners.

Implementation 1: The SL-PRS bandwidth information may be a specific value of the bandwidth, and the information about the quantity of symbols for the SL-PRS is a specific value of the quantity of symbols. For example, the bandwidth is 10 MHz, and the quantity of symbols is 5. In this case, the SL-PRS bandwidth information is 10 MHz, and the information about the quantity of symbols for the SL-PRS is 5.

Implementation 2: Each bandwidth value may correspond to one bandwidth index, and the SL-PRS bandwidth information may be the bandwidth index. Similarly, each quantity of symbols may correspond to one index of the quantity of symbols, and the information about the quantity of symbols for the SL-PRS may be the index of the quantity of symbols. For example, when the bandwidth value is 10 MHz, the bandwidth index is 1100; and when the quantity of symbols is 5, the symbol index is 101. If the network device configures a bandwidth corresponding to one first resource as 10 MHz and configures a quantity of symbols corresponding to the first resource as 5, SL-PRS bandwidth information corresponding to the first resource is 1100, and information about the quantity of symbols for the SL-PRS corresponding to the first resource is 101. Optionally, the network device may first configure a correspondence between the bandwidth and the bandwidth index for the terminal device, or may first configure a correspondence between the quantity of symbols and the index of the quantity of symbols for the terminal device. The terminal may determine, based on the correspondences, the bandwidth indicated by the SL-PRS bandwidth information and the quantity of symbols that is indicated by the information about the quantity of symbols for the SL-PRS.

In this implementation, the SL-PRS bandwidth information corresponding to each first resource may also be understood as that each first resource corresponds to one piece of SL-PRS bandwidth information; and the information about the quantity of symbols for the SL-PRS corresponding to each first resource may also be understood as that each first resource corresponds to one piece of information about a quantity of symbols for the SL-PRS.

In the second implementation, that the first resource corresponds to the SL-PRS bandwidth information and/or the information about the quantity of symbols for the SL-PRS may also be understood as follows.

The network device configures the information about the first SR for the terminal device at a granularity of the bandwidth information of the SL-PRS and/or the information about the quantity of symbols for the SL-PRS; or the network device configures the information about the first SR for the terminal device at a level of the bandwidth information of the SL-PRS and/or the information about the quantity of symbols for the SL-PRS; or the information about the first SR that is configured by the network device corresponds to the bandwidth information of the SL-PRS and/or the information about the quantity of symbols for the SL-PRS; or the network device configures the information about the first SR for the terminal device based on the bandwidth information of the SL-PRS and/or the information about the quantity of symbols for the SL-PRS. Optionally, the information about the first SR includes information about the resource used for transmission of the first SR by the terminal device.

In an implementation, the bandwidth indicated by the bandwidth information of the SL-PRS is an SL-PRS bandwidth corresponding to the location service performed by the terminal device. For example, the terminal device performs one or more location services, and the one or more location services may correspond to at least one SL-PRS bandwidth. The at least one SL-PRS bandwidth corresponds to a same first SR (or first resource), or each of the at least one SL-PRS bandwidth corresponds to one first SR (or first resource).

In an implementation, the quantity of symbols that is indicated by the information about the quantity of symbols for the SL-PRS is a quantity of symbols for the SL-PRS corresponding to the location service performed by the terminal device. For example, the terminal device performs one or more location services, and the one or more location services may correspond to at least one quantity of symbols for the SL-PRS. The at least one quantity of symbols for the SL-PRS corresponds to a same first SR (or first resource), or each of the at least one quantity of symbols for the SL-PRS corresponds to one first SR (or first resource).

In an implementation, the bandwidth indicated by the bandwidth information of the SL-PRS and the quantity of symbols that is indicated by the information about the quantity of symbols for the SL-PRS are an SL-PRS bandwidth and a quantity of symbols for the SL-PRS that correspond to the location service performed by the terminal device. For example, the terminal device performs one or more location services, and the one or more location services may correspond to at least one SL-PRS bandwidth and at least one quantity of symbols for the SL-PRS. The at least one SL-PRS bandwidth and the at least one quantity of symbols for the SL-PRS correspond to a same first SR (or first resource), or each of the at least one SL-PRS bandwidth and each of the at least one quantity of symbols for the SL-PRS correspond to one first SR (or first resource).

For example, with reference to the foregoing descriptions, it is assumed that the first information indicates four first resources, and indicates SL-PRS resource pool information, SL-PRS bandwidth information, and information about a quantity of symbols for the SL-PRS corresponding to each of the four first resources. This may be shown in Table 1.

**Table 1**

| | SL-PRS resource pool information | SL-PRS bandwidth information | Information about the quantity of symbols for the SL-PRS |
|---|---|---|---|
| First resource 1 | Shared resource pool | Bandwidth: 10 MHz | Quantity of symbols: 3 |
| First resource 2 | SL-PRS dedicated resource pool | Bandwidth: 20 MHz | Quantity of symbols: 3 |
| First resource 3 | Shared resource pool | Bandwidth: 20 MHz | Quantity of symbols: 5 |
| First resource 4 | SL-PRS dedicated resource pool | Bandwidth: 10 MHz | Quantity of symbols: 5 |

Table 1 is merely an example. During actual application, each first resource may correspond to only one or more items in Table 1.

For example, assuming that the terminal device sends the first SR by using the first resource 1, the network device may schedule a resource in the shared resource pool for the terminal device. In addition, a bandwidth of the scheduled resource may be 10 MHz, and a quantity of symbols included in the resource may be 3.

For another example, assuming that the terminal device sends the first SR by using the first resource 2, the network device may schedule a resource in the SL-PRS dedicated resource pool for the terminal device. In addition, a bandwidth of the scheduled resource may be 20 MHz, and a quantity of symbols included in the resource may be 3. Other cases are deduced by analogy, and details are not described.

In an implementation, if the terminal device sends the second information before the first information, the second information indicates bandwidth information required for one or more location services (for example, bandwidth information of the SL-PRS) and/or information about a quantity of symbols required for the location service (for example, information about a quantity of symbols for the SL-PRS). For example, bandwidth information of the SL-PRS and/or information about a quantity of symbols for the SL-PRS that are/is corresponding to each location service are/is related to the location service of the terminal device. The terminal device indicates, to the network device via the second information, an SL-PRS bandwidth requirement and/or a requirement on a quantity of symbols for the SL-PRS that are/is related to one or more current location services. In this way, the network device may determine, based on the second information, a bandwidth and/or a quantity of symbols that are/is required for transmission of the SL-PRS and that are required for the location service of the terminal device, to configure, for the terminal device, a first SR or a first resource corresponding to the bandwidth of the SL-PRS and/or the quantity of symbols for the SL-PRS.

In the foregoing method, the first information further indicates the SL-PRS bandwidth information and/or the information about the quantity of symbols for the SL-PRS corresponding to each first resource, so that the terminal device can determine a bandwidth and/or a quantity of symbols corresponding to each first resource. The terminal device can select, from the at least one first resource based on a bandwidth and/or a quantity of symbols that are/is required by the resource for transmission of the SL-PRS, a first resource corresponding to the bandwidth and/or the quantity of symbols, so that the terminal device can obtain sufficient resources for transmission of the SL-PRS.

In a third implementation, the first information may further indicate location service requirement information corresponding to each of at least one first resource. The terminal device may determine, based on location service requirement information of a location service that needs to be performed, a first resource corresponding to the location service requirement information, so that transmission of the first SR can be performed on the first resource. The network device receives the first SR on the first resource, to determine the location service requirement information of the location service that needs to be performed by the terminal device, and schedule, for the terminal device based on the location service requirement information, a resource used for transmission of the SL-PRS.

In the foregoing method, the first information further indicates the location service requirement information corresponding to each first resource. The terminal device may select, from the at least one first resource based on the location service requirement information of the location service, the first resource corresponding to the location service requirement information, so that the SL-PRS transmitted by the terminal device meets the location service requirement information.

The location service requirement information may include at least one of the following: identification information of the location service, positioning quality of service corresponding to the location service, bandwidth information required for the location service (or bandwidth information of the SL-PRS), or information about a quantity of symbols required for the location service (or information about a quantity of symbols for the SL-PRS).

Any two of the at least one first resource may correspond to different location service requirement information, or may correspond to same location service requirement information. This is not limited in this application.

In this implementation, the network device configures, for the terminal device, the first resource used for transmission of the first SR, and the first resource corresponds to the location service requirement information. This may also be understood as follows.

The network device configures information about the first SR for the terminal device at a granularity of the location service requirement information, or the network device configures the information about the first SR for the terminal device at a location service requirement information level, or the information about the first SR configured by the network device corresponds to the location service requirement information of the terminal device, or the network device configures the information about the first SR for the terminal device based on a location service requirement. Optionally, the information about the first SR includes information about the resource used for transmission of the first SR by the terminal device.

In an implementation, the terminal device performs one or more location services. The one or more location services may correspond to at least one piece of location service requirement information, and the at least one piece of location service requirement information corresponds to information about a same first SR (or first resource), or each of the at least one piece of location service requirement information corresponds to information about one first SR (or first resource).

In an implementation, before the terminal device sends the first information, the terminal device sends the second information to the network device. The terminal device indicates, to the network device via the second information, at least one of bandwidth information required for one or more location services, information about a quantity of symbols required for the location service, identification information of the location service, and positioning QoS of the location service. In this way, the network device may configure, for the terminal device based on the second information, a first SR or a first resource corresponding to the at least one of the bandwidth information, the information about the quantity of symbols, the identification information of the location service, and the positioning QoS.

For example, it is assumed that the second information indicates three location services and indicates information corresponding to each location service. This may be shown in Table 2.

**Table 2**

| Location service | Required bandwidth information | Information about a quantity of required symbols | Positioning QoS |
|---|---|---|---|
| Location service 1 | Bandwidth: 10 MHz | Quantity of symbols: 2 | Index of the positioning QoS: a |
| Location service 2 | Bandwidth: 15 MHz | Quantity of symbols: 4 | Index of the positioning QoS: b |
| Location service 3 | Bandwidth: 20 MHz | Quantity of symbols: 6 | Index of the positioning QoS: c |

Table 2 is merely an example. During actual application, each location service may correspond to only one or more items in Table 2.

Based on Table 2, the network device may configure one or more first resources for each location service based on the bandwidth information, the information about the quantity of symbols, and the positioning QoS that are required for each location service. For example, the network device configures six first resources, and indicates SL-PRS resource pool information, SL-PRS bandwidth information, and information about a quantity of symbols for the SL-PRS corresponding to each of the six first resources. This may be shown in Table 3.

**Table 3**

| | SL-PRS resource pool information | SL-PRS bandwidth information | Information about a quantity of symbols for the SL-PRS |
|---|---|---|---|
| First resource 1 | Shared resource pool | Bandwidth: 10 MHz | Quantity of symbols: 2 |
| First resource 2 | SL-PRS dedicated resource pool | Bandwidth: 12 MHz | Quantity of symbols: 3 |
| First resource 3 | Shared resource pool | Bandwidth: 15 MHz | Quantity of symbols: 4 |
| First resource 4 | SL-PRS dedicated resource pool | Bandwidth: 18 MHz | Quantity of symbols: 5 |
| First resource 5 | Shared resource pool | Bandwidth: 20 MHz | Quantity of symbols: 6 |
| First resource 6 | SL-PRS dedicated resource pool | Bandwidth: 20 MHz | Quantity of symbols: 6 |

Table 1 is merely an example. During actual application, each first resource may correspond to only one or more items in Table 3.

For example, assuming that the terminal device needs to send an SL-PRS corresponding to the location service 1, the terminal device may send the first SR by using the first resource 1 or the first resource 2 based on the bandwidth information, the information about the quantity of symbols, and the positioning QoS that are required for the location service 1.

Assuming that the terminal device needs to send an SL-PRS corresponding to the location service 2, the terminal device may send the first SR by using the first resource 3 or the first resource 4 based on the bandwidth information, the information about the quantity of symbols, and the positioning QoS that are required for the location service 2.

Assuming that the terminal device needs to send an SL-PRS corresponding to the location service 3, the terminal device may send the first SR by using the first resource 5 or the first resource 6 based on the bandwidth information, the information about the quantity of symbols, and the positioning QoS that are required for the location service 3.

The foregoing is merely examples, and does not constitute a limitation on this application. For example, assuming that the terminal device needs to send the SL-PRS corresponding to the location service 1, the terminal device may alternatively send the first SR by using another first resource (for example, the first resource 6).

The foregoing implementations may be separately used, or may be implemented in combination. This is not limited in this application.

Step 204: The terminal device determines to send the SL-PRS.

That the terminal device determines to send the SL-PRS may mean that the terminal device determines that the SL-PRS needs to be sent, or that the terminal device is triggered to send the SL-PRS.

In an implementation, the terminal device may determine, when the terminal device has a location service requirement, that the SL-PRS needs to be transmitted. Alternatively, when the terminal device needs to assist another terminal device in positioning, to implement positioning of the another terminal device, the terminal device may determine that the SL-PRS needs to be transmitted. This is not limited in this application.

In an implementation, if determining to perform a positioning procedure or initiate positioning, the terminal device determines to send the SL-PRS.

For example, the terminal device has the location service requirement. In this case, a higher layer of the terminal device, for example, an RRC layer or an SLPP layer, determines to send the SL-PRS. In this case, sending of the SL-PRS is triggered.

This implementation may also be understood as that the terminal device autonomously determines to send the SL-PRS, to trigger sending of the SL-PRS.

In an implementation, if the terminal device receives positioning indication information sent by the another terminal device, the terminal device determines to send the SL-PRS. The positioning indication information requests the terminal device to send the SL-PRS. Optionally, in this case, the higher layer of the terminal device may determine, based on the positioning indication information, to send the SL-PRS, so as to trigger sending of the SL-PRS.

The positioning indication information may be carried via sidelink control information (sidelink control information, SCI).

This implementation may also be understood as that the terminal device needs to assist the another terminal device in implementing positioning of the another terminal device, or the terminal device is requested by the another terminal device to send the SL-PRS, and the terminal device determines to send the SL-PRS, to trigger sending of the SL-PRS.

In an implementation, the terminal device determines that the sent SL-PRS is an aperiodic SL-PRS.

Step 205: If no resource is available for transmission of the SL-PRS, the terminal device triggers the first SR.

Triggering the first SR may also be understood as triggering reporting of the first SR or triggering sending of the first SR.

In some embodiments, if the network device configures transmission of the SL-PRS in a resource allocation mode 1 for the terminal device, the resource for transmission of the SL-PRS by the terminal device is scheduled by the network device, but not selected by the terminal device. In this case, when the network device schedules no sidelink resource for the terminal device, if the terminal device needs to send the SL-PRS, the terminal device may have no resource for transmission of the SL-PRS.

In the foregoing method, the terminal device triggers the first SR when no resource is available for transmission of the SL-PRS, so that the first SR can be used to request the resource for transmission of the SL-PRS, to implement transmission of the SL-PRS, improve transmission efficiency of the SL-PRS, and ensure positioning accuracy.

In some embodiments, after triggering the first SR, the terminal device may alternatively cancel the triggered first SR.

In an implementation, after sending the first SR to the network device, the terminal device may cancel the triggered first SR.

In an implementation, after sending the SL-PRS, the terminal device may cancel the triggered first SR.

In an implementation, the terminal device receives resource indication information from the network device. The resource indication information indicates a third resource. If the third resource can carry (or accommodate) all the pending SL-PRS transmissions, the terminal device may cancel the triggered first SR. Alternatively, if the third resource can carry (or accommodate) all the pending transmissions of SL-PRSs that trigger the first SR, the terminal device may cancel the triggered first SR. In this case, the terminal device may send the SL-PRS on the third resource. Optionally, the third resource is a sidelink resource.

In an implementation, the terminal device receives resource indication information from the network device. The resource indication information indicates a third resource used for transmission of data. If the third resource can carry (or accommodate) all the pending data and SL-PRS transmissions, the terminal device may cancel the triggered first SR. Alternatively, if the third resource can carry (or accommodate) all the pending transmission of data and SL-PRSs that trigger the first SR, the terminal device may cancel the triggered first SR. In this case, the terminal device may send the SL-PRS on the third resource. Optionally, the third resource is a sidelink resource.

In the foregoing method, after the terminal device sends the first SR or the SL-PRS, or when the terminal device determines that the third resource can be used for transmission of the SL-PRS, the terminal device no longer needs a resource for transmission of the SL-PRS. Therefore, the terminal device cancels the triggered first SR. This can avoid a waste of resources and improve resource utilization.

Step 205 is an optional step. If a resource is available for transmission of the SL-PRS, the terminal device may directly send the SL-PRS.

Step 206: The terminal device sends the first SR to the network device on the first resource.

Correspondingly, the network device receives the first SR on the first resource.

In an implementation, the terminal device may determine, in the at least one first resource based on the SL-PRS, a first resource used to send the first SR.

In this implementation, the SL-PRS and the first resource used to send the first SR meet at least one of the following:
a resource pool to which the resource used for transmission of the SL-PRS belongs is the same as a resource pool indicated by resource pool information corresponding to the first resource;
a bandwidth required for a location service corresponding to the SL-PRS is equal to a bandwidth indicated by bandwidth information corresponding to the first resource, and the bandwidth required for the location service corresponding to the SL-PRS may be a bandwidth required for transmission of the SL-PRS;
a quantity of symbols required for the location service corresponding to the SL-PRS is equal to a quantity of symbols indicated by information about a quantity of symbols corresponding to the first resource, and the quantity of symbols required for the location service corresponding to the SL-PRS may be a quantity of symbols required for transmission of the SL-PRS; or
location service requirement information required for the location service corresponding to the SL-PRS is the same as location service requirement information corresponding to the first resource.

For example, if the terminal device has the SL-PRS to be transmitted on a resource in the shared resource pool, the terminal device may determine, in the at least one first resource, a first resource corresponding to the shared resource pool, and send the first SR on the first resource.

The resource pool information corresponding to the first resource may be understood as SL-PRS resource pool information corresponding to the first resource, and may be, for example, a dedicated resource pool, indicating that a resource pool that is requested by using an SR sent on the first resource and that is used for transmission of the SL-PRS is a dedicated resource pool. Similarly, the information about the quantity of symbols corresponding to the first resource may be understood as a quantity of symbols of the SL-PRS corresponding to the first resource, or may be understood as a quantity of symbols occupied by the SL-PRS corresponding to the first resource. Other parameters are similar and are not listed one by one.

For example, if the bandwidth required for transmission of the SL-PRS by the terminal device is 10 MHz, the terminal device may determine a first resource in the at least one first resource, where a bandwidth indicated by SL-PRS bandwidth information corresponding to the first resource is equal to 10 MHz, and send the first SR on the first resource. Alternatively, the terminal device may determine a first resource in the at least one first resource, where a bandwidth indicated by bandwidth information corresponding to the first resource is greater than 10 MHz, and send the first SR on the first resource.

For example, if the quantity of symbols required for transmission of the SL-PRS by the terminal device is 5, the terminal device may determine a first resource in the at least one first resource, where a quantity of symbols that is indicated by information about a quantity of symbols corresponding to the first resource is equal to 5, and send the first SR on the first resource. Alternatively, the terminal device may determine a first resource in the at least one first resource, where a quantity of symbols that is indicated by information about a quantity of symbols corresponding to the first resource is greater than 5, and send the first SR on the first resource.

For example, if an index of positioning quality of service indicated by location service requirement information required for the location service corresponding to the SL-PRS transmitted by the terminal device is 5, the terminal device may determine a first resource in the at least one first resource, where an index of positioning quality of service indicated by location service requirement information corresponding to the first resource is 5, and send the first SR on the first resource.

Optionally, that the terminal device determines, based on the SL-PRS, the first resource used to send the first SR may also be understood as that the terminal device determines, based on a current location service requirement, an SL-PRS transmission requirement required for the location service, to determine one or more of resource pool information, bandwidth information, or information about a quantity of symbols required for transmission of the SL-PRS.

The foregoing is merely examples. How the terminal device specifically determines, in the at least one first resource, a resource used for transmission of the first SR is not limited in this application.

Step 207: The network device sends a first sidelink grant (sidelink grant) to the terminal device based on the first SR. The first sidelink grant indicates a second resource.

Correspondingly, the terminal device receives the first sidelink grant from the network device.

Step 207 is an optional step. The network device may not send the first sidelink grant. Whether the network device sends the first sidelink grant is not limited in this application.

In an implementation, the second resource scheduled by the network device for the terminal device is a sidelink resource in the SL-PRS dedicated resource pool. The network device may further determine, based on a bandwidth of the SL-PRS dedicated resource pool, a bandwidth of the second resource scheduled for the terminal device. Optionally, there is a correspondence between a bandwidth of the SL-PRS and the SL-PRS dedicated resource pool, and each SL-PRS dedicated resource pool corresponds to a bandwidth of one SL-PRS. For example, if the bandwidth of the SL-PRS is equal to the bandwidth of the dedicated resource pool, a bandwidth of a second resource scheduled by the network device in one SL-PRS dedicated resource pool is equal to the bandwidth of the SL-PRS corresponding to the SL-PRS dedicated resource pool.

In an implementation, the second resource scheduled by the network device for the terminal device is a sidelink resource in the shared resource pool. Optionally, if the terminal device further needs to send data to another terminal device, for example, the terminal device sends, in addition to the first SR, an SR used to request a resource for the data, the network device may determine, based on a bandwidth corresponding to a data transmission requirement, a bandwidth of the second resource scheduled for the terminal device. For example, if the bandwidth of the SL-PRS is equal to the bandwidth of the data transmission requirement, the bandwidth of the second resource scheduled by the network device in the shared resource pool is equal to a bandwidth of a resource scheduled for the data in the shared resource pool. For another example, if the bandwidth of the SL-PRS is equal to a bandwidth of a physical sidelink shared channel (physical sidelink shared channel, PSSCH) on which the data is located, the bandwidth of the second resource scheduled by the network device in the shared resource pool is equal to a bandwidth of a PSSCH on which a resource scheduled for the data in the shared resource pool is located.

In an implementation, if the first information further indicates the resource pool information corresponding to each of the at least one first resource, the first resource used by the terminal device to send the first SR further corresponds to the resource pool information. If the resource pool information corresponding to the first resource used by the terminal device to send the first SR indicates an SL-PRS dedicated resource pool 1, the second resource scheduled by the network device for the terminal device is a sidelink resource in the SL-PRS dedicated resource pool 1. The network device may further determine, based on a bandwidth of the SL-PRS dedicated resource pool 1, a bandwidth of the second resource scheduled for the terminal device. For details, refer to the foregoing descriptions. Details are not described herein again.

In an implementation, if the resource pool information corresponding to the first resource used by the terminal device to send the first SR indicates the shared resource pool, the second resource scheduled by the network device for the terminal device is a sidelink resource in the shared resource pool. Optionally, if the terminal device sends, in addition to the first SR, an SR used to request a resource for the data, the network device may determine, based on the bandwidth corresponding to the data transmission requirement, a bandwidth of the second resource scheduled for the terminal device. For details, refer to the foregoing descriptions. Details are not described herein again.

In an implementation, if the first information further indicates the bandwidth information and/or the information about the quantity of symbols corresponding to each of the at least one first resource, the first resource used by the terminal device to send the first SR further corresponds to the bandwidth information and/or the information about the quantity of symbols. The network device may determine a size of the second resource based on the bandwidth information and/or the information about the quantity of symbols corresponding to the first resource. For example, the bandwidth of the second resource scheduled by the network device is greater than or equal to a bandwidth requested by the terminal device on the first resource, and/or a quantity of symbols of the second resource scheduled by the network device is greater than or equal to a quantity of symbols requested by the terminal device on the first resource.

In an implementation, if the first information further indicates the location service requirement information corresponding to each of the at least one first resource, the first resource used by the terminal device to send the first SR further corresponds to the location service requirement information. The network device may determine the size of the second resource based on the location service requirement information corresponding to the first resource. It may be understood that the network device schedules, for the terminal device, a second resource suitable for current location service requirement information, so that a location service requirement can be ensured. For example, if accuracy of positioning quality of service in the location service requirement information is higher, the network device may schedule, for the terminal device, a second resource that "can carry an SL-PRS with a larger bandwidth and a larger quantity of symbols".

The foregoing implementations may be separately used, or may be implemented in combination. This is not limited in this application.

Step 208: The terminal device sends the SL-PRS on the second resource indicated by the first sidelink grant.

Step 208 is an optional step. The terminal device may not send the SL-PRS. Whether the terminal device sends the SL-PRS is not limited in this application.

The terminal device may further receive a measurement result from another terminal device. The measurement result is determined based on the SL-PRS sent by the terminal device. The terminal device may perform positioning based on the measurement result. How the terminal device specifically performs positioning is not limited in this application. Details are not described herein.

According to the foregoing procedure, the network device pre-configures the at least one first resource for the terminal device based on the first information. When the terminal device has the SL-PRS to be transmitted, the terminal device may send the first SR to the network device on the first resource, and the terminal device may request, from the network device via the first SR, the resource for transmission of the SL-PRS, so that transmission of the SL-PRS can be implemented, transmission efficiency of the SL-PRS can be improved, and positioning accuracy can be ensured.

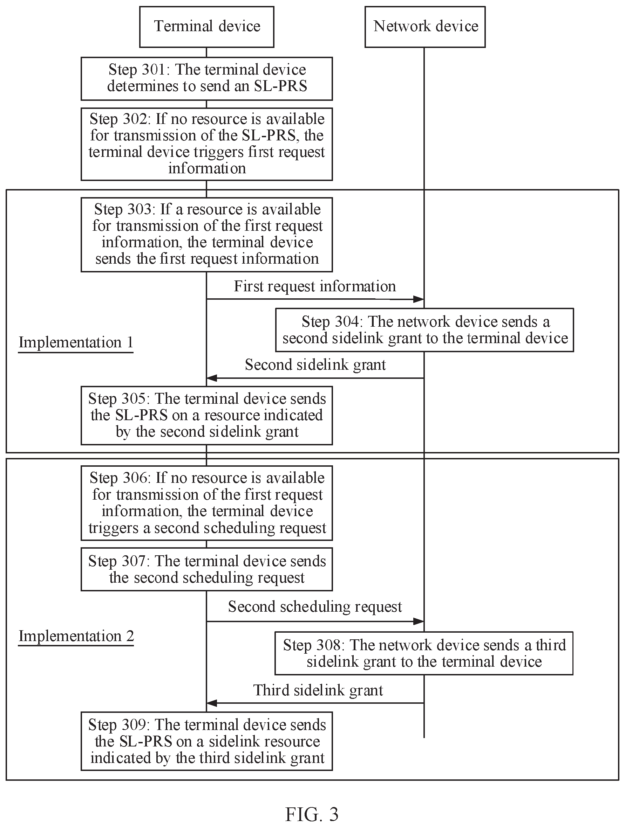

FIG. 3 is a schematic flowchart of a communication method according to an embodiment of this application. The method includes the following steps.

Step 301: A terminal device determines to send an SL-PRS.

For how the terminal device determines that the SL-PRS needs to be sent, refer to the descriptions in step 204. Details are not described herein again.

Step 302: If no resource is available for transmission of the SL-PRS, the terminal device triggers first request information.

The first request information is used to request a resource for transmission of the SL-PRS.

In some embodiments, if a network device configures transmission of the SL-PRS in a resource allocation mode 1 for the terminal device, the resource for transmission of the SL-PRS by the terminal device is scheduled by the network device, but not selected by the terminal device. In this case, when the network device schedules no sidelink resource for the terminal device, if the terminal device needs to send the SL-PRS, the terminal device may have no resource for transmission of the SL-PRS.

In an implementation, that the terminal device triggers the first request information in step 302 may alternatively be replaced with that the terminal device triggers a first request.

In an implementation, the first request information is carried in a medium access control (medium access control, MAC) control element (control element, CE).

In this application, triggering the first request information or the first request may also be understood as triggering reporting of the first request information, triggering sending of the first request information, triggering reporting of the MAC CE corresponding to the first request information, or triggering sending of the MAC CE corresponding to the first request information.

In an implementation, the resource requested by using the first request information is used for transmission of an aperiodic SL-PRS. To be specific, for a transmission requirement on the aperiodic SL-PRS, the terminal device may request, from the network device by using the first request information, the resource for transmission of the SL-PRS.

In an implementation, the first request information indicates one or more of the following:
positioning quality of service corresponding to the SL-PRS;
an index of a location service corresponding to the SL-PRS;
an identifier of the location service corresponding to the SL-PRS;
a size of the SL-PRS;
bandwidth information of a resource used for transmission of the SL-PRS;
information about a quantity of symbols of the resource used for transmission of the SL-PRS; or
identification information of a terminal device that receives the SL-PRS.

For meanings and content of the foregoing parameters, refer to the descriptions in step 202 or step 203. Details are not described herein again.

The terminal device receiving the SL-PRS may be understood as follows: If the terminal device (for example, a first terminal device) determines, in step 301, that the SL-PRS is sent to a second terminal device, the second terminal device is the terminal device receiving the SL-PRS. In this case, the first terminal device may include identification information of the second terminal device in the first request information, so that the network device learns of a specific terminal device to which the first terminal device needs to send the SL-PRS, to help the network device perform resource scheduling. Optionally, the identification information of the terminal device may be a destination layer-2 identifier (destination layer-2 ID), or a destination (destination) identifier or index. Optionally, the identifier or the index may be understood as an index of at least one second terminal device maintained by the first terminal device on the first terminal device. For example, if the first terminal device needs to send the SL-PRS to five second terminal devices, identifiers or indexes of the second terminal devices may be 1 to 5, or the identifiers or the indexes of the second terminal devices may be 0001 to 0101.

In an implementation, an example in which the terminal device is the first terminal device is still used. If SL-PRS transmission resources requested by the first terminal device in the first request information are for a plurality of second terminal devices, that is, the first terminal device needs to send the SL-PRS to the plurality of second terminal devices, the first terminal device may include information about the plurality of second terminal devices in the first request information. Information about each second terminal device in the information about the plurality of second terminal devices is one or more items indicated by the first request information.

For example, the first terminal device requests, from the network device via the first request information, the resources for transmission of the SL-PRS, and the SL-PRS is sent to the second terminal device and a third terminal device. In this case, the first terminal device includes, in the first request information, one or more of positioning quality of service corresponding to the SL-PRS related to the second terminal device, an index of a location service corresponding to the SL-PRS, an identifier of the location service corresponding to the SL-PRS, a size of the SL-PRS, bandwidth information of a resource used for transmission of the SL-PRS, information about a quantity of symbols of the resource used for transmission of the SL-PRS, or the identification information of the second terminal device. The first terminal device further includes, in the first request information, one or more of positioning quality of service corresponding to the SL-PRS related to the third terminal device, an index of a location service corresponding to the SL-PRS, an identifier of the location service corresponding to the SL-PRS, a size of the SL-PRS, bandwidth information of a resource used for transmission of the SL-PRS, information about a quantity of symbols of the resource used for transmission of the SL-PRS, or identification information of the third terminal device (referred to as terminal device information for short below). Therefore, the network device can learn that the SL-PRS transmission resources requested by the first terminal device are for the plurality of terminal devices, to avoid a case in which a resource scheduled by the network device is not applicable to transmission of the SL-PRS by the first terminal device.

Optionally, when the first terminal device requests, from the network device via the first request information, the transmission resources for sending the SL-PRS to a plurality of other terminal devices, the first terminal device needs to include terminal device information of the plurality of other terminal devices in the first request information. In this case, the first terminal device may further sort the terminal device information based on a first factor. For example, the first factor is an SL-PRS transmission priority. That is, the first terminal device sorts the terminal device information based on SL-PRS transmission priorities, or the first terminal device preferentially includes terminal device information with a high SL-PRS transmission priority. For example, if a transmission priority of the SL-PRS sent by the first terminal device to the second terminal device is 2, a transmission priority of the SL-PRS sent by the first terminal device to the third terminal device is 4, and a transmission priority of the SL-PRS sent by the first terminal device to a fourth terminal device is 5. A priority order is that 2 is higher than 4, and 4 is higher than 5. In this case, the first terminal device preferentially includes the terminal device information of the second terminal device, then includes the terminal device information of the third terminal device, and finally includes terminal device information of the fourth terminal device. Therefore, the network device may preferentially schedule a resource for a terminal device with a high SL-PRS priority, to ensure accuracy of a location service related to the terminal device with the high SL-PRS transmission priority.

Optionally, the SL-PRS transmission priority may also be understood as an SL-PRS priority. For example, SL-PRS priorities include eight levels.

Optionally, a higher location service requirement of a location service indicates a higher SL-PRS transmission priority corresponding to the location service.

Optionally, that the first terminal device includes the terminal device information in the first request information may also be understood as that the first terminal device determines specific terminal devices whose terminal device information is included in the first request information.

Optionally, in addition to the SL-PRS transmission priority, the first factor may further include one or more of: positioning quality of service, a size of bandwidth information, a size of information about a quantity of symbols, and the like of a location service.

In an implementation, before the terminal device sends the first request information, the terminal device sends second information to the network device. For the second information, refer to the descriptions about the second information in step 202. In addition, the second information may further indicate an index or an identifier corresponding to location service requirement information, that is, each piece of location service requirement information has the corresponding index or identifier. For the location service requirement information, refer to the descriptions about the location service requirement information in step 202. For example, the second information indicates a location service requirement information list. The location service requirement information list includes location service requirement information corresponding to one or more location services. The terminal device may first indicate, to the network device via the second information, one or more location services that need to be performed by the terminal device. Then, the terminal device may directly include an index or an identifier of the location service requirement information in the first request information, without including the location service requirement information, so that the network device may determine the location service requirement information of the location service based on the index or the identifier of the location service requirement information, and schedules, for the terminal device based on the location service requirement information, a resource that is for transmission of the SL-PRS and that corresponds to the location service.

In an implementation, before the terminal device sends the first request information, the network device may send fifth information to the terminal device. The fifth information indicates a correspondence between the location service and one or more of the following positioning information: the bandwidth information of the SL-PRS, the information about the quantity of symbols for the SL-PRS, the positioning QoS, the SL-PRS transmission priority, a location service priority, and the identifier or the index of the location service.

The fifth information may indicate a relationship between one or more location services and the positioning information. The terminal device may directly include an index or an identifier of location service requirement information in the first request information based on the correspondence indicated by the fifth information and a location service for which the terminal device currently has the SL-PRS to be transmitted, so that the network device can determine the location service based on the index or the identifier of the location service. Alternatively, the terminal device may directly include SL-PRS bandwidth information corresponding to a location service in the first request information based on the correspondence indicated by the fifth information and the location service for which the terminal device currently has the SL-PRS to be transmitted, so that the network device can determine the location service based on the SL-PRS bandwidth information. Alternatively, the terminal device may directly include information about a quantity of symbols for the SL-PRS corresponding to a location service in the first request information based on the correspondence indicated by the fifth information and the location service for which the terminal device currently has the SL-PRS to be transmitted, so that the network device can determine the location service based on the information about the quantity of symbols for the SL-PRS. Alternatively, the terminal device may directly include an SL-PRS transmission priority corresponding to a location service in the first request information based on the correspondence indicated by the fifth information and the location service for which the terminal device currently has the SL-PRS to be transmitted, so that the network device can determine the location service based on the SL-PRS transmission priority. Alternatively, the terminal device may directly include a location service priority corresponding to a location service in the first request information based on the correspondence indicated by the fifth information and the location service for which the terminal device currently has the SL-PRS to be transmitted, so that the network device can determine the location service based on the location service priority. Optionally, the network device may maintain the foregoing correspondence, so that the network device can determine a location service based on information included by the terminal device in the first request information, and can further determine an SL-PRS transmission bandwidth and/or a quantity of symbols corresponding to the location service, to schedule, for the terminal device, a resource for transmission of the SL-PRS.

In an implementation, a value of a logical channel identifier (logical channel identifier, LCID) corresponding to the first request information is different from an LCID corresponding to a sidelink buffer status report, and the sidelink buffer status report is used to request a sidelink resource for transmission of data. For example, the value of the LCID corresponding to the first request information is a value of a logical channel identifier reserved in a protocol. "Reserved" may also be understood as "not used".

In an implementation, the value of the LCID corresponding to the first request information is any one of 37 to 42 and 47.

In an implementation, a value of an extended logical channel identifier (extended logical channel identifier, LCID) corresponding to the first request information is any one of 64 to 292.

In an implementation, a priority of the first request information is higher than a priority of the sidelink buffer status report. The priority may be a logical channel priority. According to the method, when the terminal device needs to perform transmission of both the data and the first request information, the terminal device can preferentially perform transmission of the first request information, to ensure positioning accuracy of the terminal device.

The priority of the first request information may be configured by the network device, or may be predefined in the protocol.

In this application, after triggering the first request information, the terminal device may further cancel the triggered first request information.

In an implementation, after sending the first request information to the network device, the terminal device may cancel the triggered first request information.

In an implementation, after sending the SL-PRS, the terminal device may cancel the triggered first request information.

In an implementation, the terminal device receives resource indication information from the network device. The resource indication information indicates a third resource. If the third resource can carry (or accommodate) all the pending SL-PRS transmissions, the terminal device may cancel the triggered first request information. Alternatively, if the third resource can carry (or accommodate) all the pending transmissions of SL-PRSs that trigger the first request information, the terminal device may cancel the triggered first request information. In this case, the terminal device may send the SL-PRS on the third resource. Optionally, the third resource is a sidelink resource.

In an implementation, the terminal device receives resource indication information from the network device. The resource indication information indicates a third resource used for transmission of data. If the third resource can carry (or accommodate) all the pending data and SL-PRS transmissions, the terminal device may cancel the triggered first request information. Alternatively, if the third resource can carry (or accommodate) all the pending transmission of data and SL-PRSs that trigger the first request information, the terminal device may cancel the triggered first request information. In this case, the terminal device may send the SL-PRS on the third resource. Optionally, the third resource is a sidelink resource.

For example, the terminal device first requests a resource for the data. To be specific, the terminal device sends a buffer status report (buffer status report, BSR) MAC CE, and the BSR MAC CE is used to request the resource for transmission of the data. Then, the terminal device needs to request a transmission resource for the SL-PRS. To be specific, the terminal device triggers the first request information. The network device first receives the BSR MAC CE, and schedules the third resource for the terminal device. If the third resource can accommodate the data and the SL-PRS, the terminal device may cancel the triggered first request information.

In the foregoing method, after the terminal device sends the first request information or the SL-PRS, or when the terminal device determines that the third resource can be used for transmission of the SL-PRS, the terminal device no longer needs a resource for transmission of the SL-PRS. Therefore, the terminal device cancels the triggered first request information. This can avoid a waste of resources and improve resource utilization.

After the terminal device triggers the first request information, there may be the following two implementations.

Implementation 1: A resource is available for transmission of the first request information.

Step 303: If a resource is available for transmission of the first request information, the terminal device sends the first request information.

Correspondingly, the network device receives the first request information from the terminal device.

Step 304: The network device sends a second sidelink grant to the terminal device. The second sidelink grant indicates a resource.

Optionally, the network device sends the second sidelink authorization based on the first request information.

The second sidelink grant indicates that the resource may be a resource used for transmission of the SL-PRS.

Correspondingly, the terminal device receives the second sidelink grant from the network device.

Step 304 is an optional step. The network device may not send the second sidelink grant. Whether the network device sends the second sidelink grant is not limited in this application.

Step 305: The terminal device sends the SL-PRS on the resource indicated by the second sidelink grant.

Step 305 is an optional step. The terminal device may not send the SL-PRS. Whether the terminal device sends the SL-PRS is not limited in this application.

The terminal device may further receive a measurement result from another terminal device. The measurement result is determined based on the SL-PRS sent by the terminal device. The terminal device may perform positioning based on the measurement result. How the terminal device specifically performs positioning is not limited in this application. Details are not described herein.

Implementation 2: No resource is available for transmission of the first request information.

In an implementation, step 303 is an optional step. If no resource is available for transmission of the first request information by the terminal device, step 303 to step 305 may be replaced with the following procedure.

Step 306: If no resource is available for transmission of the first request information, the terminal device triggers a second scheduling request. The second scheduling request is used to request an uplink resource.

That no resource is available for transmission of the first request information may be understood as that there is no resource for sending the first request information, or there is no uplink resource used for new transmission.

In an implementation, the second scheduling request triggered by the terminal device is used to request a resource for transmission of the first request information. For example, the second scheduling request corresponds to the first request information. If the terminal device sends the second scheduling request, the network device may learn that the resource requested by the terminal device is used for transmission of the first request information. Optionally, the network device may alternatively first configure the second scheduling request information for the terminal device. For specific content of the second scheduling request information, refer to the information related to the first resource in step 203. However, the configuration of the network device is for the second scheduling request.

In an implementation, the second scheduling request triggered by the terminal device is used to request a resource for transmission of the first request information. For example, the second scheduling request corresponds to the first request information. If the terminal device sends the second scheduling request, the network device may learn that the resource requested by the terminal device is related to the SL-PRS.

In an implementation, the second scheduling request triggered by the terminal device is an SR used to request data transmission.

In an implementation, the second scheduling request triggered by the terminal device is the first SR in the procedure shown in FIG. 2, that is, the second scheduling request is used to request a resource for transmission of the SL-PRS.

Optionally, step 306 is an optional step. If the terminal device has a resource for transmission of the first request information, the terminal device performs step 303.

Step 307: The terminal device sends the second scheduling request.

How the terminal device sends the second scheduling request is not limited in this application. If the second scheduling request is the first SR in the procedure shown in FIG. 2, for a procedure of sending the first SR, refer to the descriptions in the procedure shown in FIG. 2. Details are not described herein again.

Correspondingly, the network device receives the second scheduling request from the terminal device.

Step 308: The network device sends a third sidelink grant to the terminal device. The third sidelink grant indicates a sidelink resource or an uplink resource.

Correspondingly, the terminal device receives the third sidelink grant from the network device.

In an implementation, the network device receives the second scheduling request, the network device schedules the uplink resource for the terminal device based on the second scheduling request, and the terminal device sends the first request information by using the uplink resource. If the network device receives the first request information, the network device may schedule the sidelink resource for the terminal device based on the first request information. For example, if the network device receives the second scheduling request sent by the terminal device in step 307, before step 308, the network device may further schedule the uplink resource for the terminal device based on the second scheduling request. The terminal device may send the first request information based on the uplink resource. Then, the network device may schedule a sidelink resource for the terminal device based on the first request information sent by the terminal device.

In an implementation, if the network device receives the second scheduling request, the network device may schedule the third sidelink grant for the terminal device based on the second scheduling request. For example, if the network device receives the second scheduling request sent by the terminal device in step 307, the network device may directly schedule the third sidelink grant for the terminal device based on the second scheduling request.

Step 308 is an optional step. The network device may not send the third sidelink grant. Whether the network device sends the third sidelink grant is not limited in this application.

Step 309: The terminal device sends the SL-PRS on the sidelink resource indicated by the third sidelink grant.

Step 309 is an optional step. The terminal device may not send the SL-PRS. Whether the terminal device sends the SL-PRS is not limited in this application.

The terminal device may further receive a measurement result from another terminal device. The measurement result is determined based on the SL-PRS sent by the terminal device. The terminal device may perform positioning based on the measurement result. How the terminal device specifically performs positioning is not limited in this application. Details are not described herein.

According to the foregoing procedure, this application provides the first request information and the second scheduling request that are used to request the SL-PRS transmission resource, so that the terminal device can request, via the first request information or the second scheduling request, the network device for the resource for transmission of the SL-PRS when needing to perform transmission of the SL-PRS. In this way, transmission of the SL-PRS can be implemented, SL-PRS transmission efficiency can be improved, and positioning accuracy can be ensured.

This application further provides a method, so that a network device can schedule, for a terminal device, a periodic resource used for transmission of an SL-PRS. Details are described below.

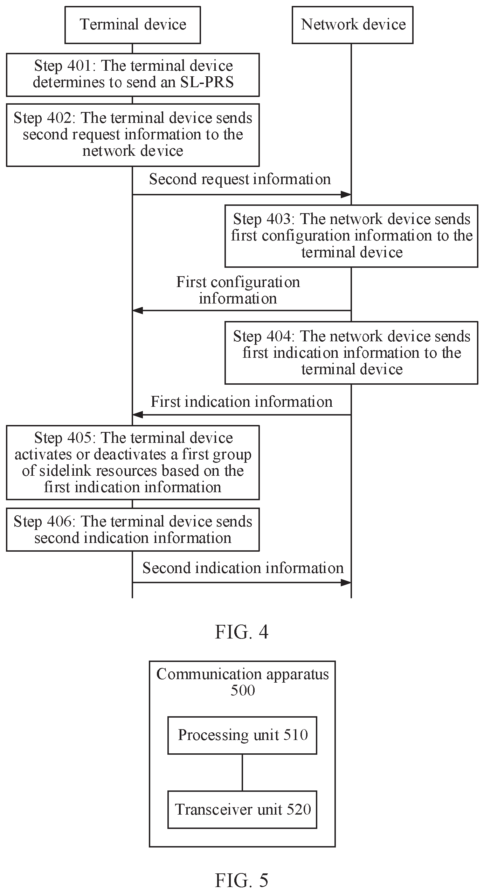

FIG. 4 is a schematic flowchart of a communication method according to an embodiment of this application. The method includes the following steps.

Step 401: A terminal device determines to send an SL-PRS.

In an implementation, if the terminal device has a location service requirement, to determine to perform a positioning procedure or initiate positioning, the terminal device determines to send the SL-PRS.

In an implementation, the terminal device needs to assist another terminal device in implementing positioning of the another terminal device, or the terminal device is requested by the another terminal device to send the SL-PRS, to determine to send the SL-PRS.

In an implementation, the SL-PRS that needs to be sent by the terminal device is a periodic SL-PRS.

For how the terminal device determines that the SL-PRS needs to be sent, also refer to the descriptions in step 204. Details are not described herein again.

Step 402: The terminal device sends second request information to a network device.

Correspondingly, the network device receives the second request information.

The terminal device may request a periodic sidelink resource from the network device via the second request information. The sidelink resource requested via the second request information is used for transmission of the SL-PRS.

In an implementation, a sidelink user equipment information (sidelink UE information, SUI) message includes the second request information.

In an implementation, the second request information may indicate at least one of the following:
bandwidth information required for a location service (or bandwidth information of the SL-PRS), information about a quantity of symbols required for the location service (or information about a quantity of symbols for the SL-PRS), positioning QoS of the location service, or an identifier of the location service.

For specific meanings of the foregoing information, refer to the descriptions in step 202. Details are not described herein again.

In an implementation, step 402 is an optional step.

Step 403: The network device sends first configuration information to the terminal device.

Correspondingly, a terminal device receives the first configuration information.

The first configuration information indicates N groups of periodic sidelink resources, and N is an integer greater than 0. Each group of sidelink resources includes at least one sidelink resource.

In an implementation, a type of the N groups of sidelink resources configured by the network device for the terminal device is a configured grant type 1 (configured grant type 1).

In an implementation, a type of the N groups of sidelink resources configured by the network device for the terminal device is a configured grant type 2 (configured grant type 2).

The resource of configured grant type 1 is a resource that can be directly used by the terminal device after the network device configures the resource for the terminal device. The resource of configured grant type 2 is configured by the network device for the terminal device, where the terminal device further needs to receive an activation message sent by the network device before using the resource. Optionally, the network device may indicate a related parameter of an activated resource via the activation message, and the terminal device uses the activated resource based on the activation message. It may be understood that the periodic resource configured by the network device for the terminal device may alternatively be a resource having a similar function or feature. In this application, the configured grant type 1 and the configured grant type 2 are used as an example for description.

In an implementation, the network device may configure the periodic sidelink resource for the terminal device based on the second request information sent by the terminal device in step 402.

In an implementation, the periodic sidelink resource configured by the network device for the terminal device may be at a granularity of the terminal device, or at a level of the terminal device, or may correspond to the terminal device. For example, the N groups of sidelink resources configured by the network device for the terminal device include a sidelink resource in an SL-PRS dedicated resource pool and a sidelink resource in a shared resource pool.

In an implementation, the periodic sidelink resource configured by the network device for the terminal device may be at a granularity of a resource pool, or at a level of the resource pool, or may correspond to the resource pool. For example, the N groups of sidelink resources configured by the network device for the terminal device include a sidelink resource in an SL-PRS dedicated resource pool and a sidelink resource in a shared resource pool.

In an implementation, the network device configures, for the terminal device, a periodic sidelink resource corresponding to an SL-PRS dedicated resource pool. For example, the N groups of sidelink resources include the sidelink resource in the SL-PRS dedicated resource pool.

In an implementation, the network device configures, for the terminal device, a periodic sidelink resource corresponding to a shared resource pool. For example, the N groups of sidelink resources include the sidelink resource in the shared resource pool.

In an implementation, the network device configures one or more groups of periodic sidelink resources for the terminal device. That is, a value of N is an integer greater than 0.

Step 404: The network device sends first indication information to the terminal device.

Correspondingly, the terminal device receives the first indication information.

The first indication information indicates to activate (activate) or deactivate (deactivate) a first group of sidelink resources in the N groups of periodic sidelink resources. The N groups of sidelink resources are used for transmission of the SL-PRS. "Deactivate" may also be replaced with a description like "release".

In an implementation, downlink control information (downlink control information, DCI) includes the first indication information.

In an implementation, the first indication information may include X bits, X is an integer greater than 0, and the X bits correspond to the first group of sidelink resources. If a value of the X bits is a first value, the first indication information indicates to activate the first group of sidelink resources; or if the value of the X bits is a second value, the first indication information indicates to deactivate the first group of sidelink resources. For example, if X = 1, and the value of the bit corresponding to the first group of sidelink resources is 1, it indicates that the first group of sidelink resources are activated; or if the value of the bit corresponding to the first group of sidelink resources is 0, it indicates that the first group of sidelink resources are deactivated. Optionally, the first indication information may further include an index, a number, or an identifier (all referred to as an index below) of the first group of sidelink resources. In this case, an activation state or a deactivation state indicated by the X bits is related to the first group of sidelink resources, that is, the X bits correspond to the first group of sidelink resources.

In an implementation, the first indication information may include a first field, and the first group of sidelink resources may correspond to the first field. If a value of at least one bit position or bit in the first field is a third value, the first indication information indicates to activate the first group of sidelink resources; or if the value of the at least one bit position or bit (the bit is used as an example below) in the first field is a fourth value, the first indication information indicates to deactivate the first group of sidelink resources. The field may also be understood as information. The field is used as an example below for description. Optionally, the first indication information may further include the index of the first group of sidelink resources. In this case, an activation state or a deactivation state indicated by the first field is related to the first group of sidelink resources, that is, the first group of sidelink resources correspond to the first field.

For example, transmission of the first indication information may be performed via DCI in a first format. For example, transmission of one or more of the following fields (or information) may be performed via the DCI in the first format: an SL-PRS field, an SL-PRS resource identifier (SL-PRS resource ID) field, a comb size (comb size) field, a resource element offset (resource element offset) field, a resource pool index (resource pool index) field, a start symbol (start symbol) field, and a quantity of symbols for the SL-PRS (number of symbol for SL-PRS) field. A resource element may also be referred to as a resource component or a resource unit. Optionally, the DCI in the first format may be used to activate or deactivate the sidelink resource in the SL-PRS dedicated resource pool. Optionally, the DCI in the first format may be further used to activate or deactivate the sidelink resource in the shared resource pool.

In this application, the first field may be one or more of the foregoing fields. For example, a value (or referred to as a state) of at least one bit in one or more of the foregoing fields indicates activation, and a value (or referred to as a state) of at least one bit in one or more of the foregoing fields indicates deactivation.

For example, the first field is the SL-PRS resource identifier field, and the SL-PRS resource identifier field occupies Y bits. If a value of the Y bits corresponding to the SL-PRS resource identifier field is a first value, the first indication information indicates activation; or if the value of the Y bits corresponding to the SL-PRS resource identifier field is a second value, the first indication information indicates deactivation. Optionally, the first value is all 0s or all 1s, and the second value is all 1s or all 0s. It may be understood that all 1s or all 0s are merely used as an example. Specific values of the first value and the second value are not limited in this application. The first value and the second value may alternatively be partially 1s and partially 0s.

For another example, the first field is the SL-PRS resource identifier field and the resource pool index field, the SL-PRS resource identifier field occupies Y bits, and the resource pool index field occupies Z bits. If a value of the Y bits corresponding to the SL-PRS resource identifier field is a first value, the first indication information indicates activation; or if a value of the Z bits occupied by the resource pool index field is a second value, the first indication information indicates deactivation. Optionally, the first value is all 0s or all 1s, and the second value is also all 0s or all 1s. It may be understood that all 1s or all 0s are merely used as an example. Specific values of the first value and the second value are not limited in this application. The first value and the second value may alternatively be partially 1s and partially 0s.

For another example, the first field is the SL-PRS resource identifier field and the resource pool index field, the SL-PRS resource identifier field occupies Y bits, and the resource pool index field occupies Z bits. If values of some of the Y bits corresponding to the SL-PRS resource identifier field are all 1s, the first indication information indicates activation; or if values of some of the Z bits occupied by the resource pool index field are all 0s, the first indication information indicates deactivation.

The foregoing is merely an example, and the first field may be alternatively implemented in another manner. Examples are not described one by one in this application.

In an implementation, the first indication information may further indicate to activate or deactivate a plurality of groups of sidelink resources in the N groups of sidelink resources. For example, the first indication information further indicates to activate or deactivate a second group of sidelink resources in the N groups of sidelink resources.

In an implementation, if the first group of sidelink resources are resources in the shared resource pool, the first indication information is scrambled with a first radio network temporary identity (radio network temporary identity, RNTI); or if the first group of sidelink resources are resources in the SL-PRS dedicated resource pool, the first indication information is scrambled with a second RNTI. The first RNTI is different from the second RNTI.

In an implementation, if the first group of sidelink resources are resources in the SL-PRS dedicated resource pool, the first indication information is carried in the DCI in the first format; or if the first group of sidelink resources are resources in the shared resource pool, the first indication information is carried in the DCI in the second format. The first format is different from the second format.

According to the foregoing method, the network device activates or deactivates, for the terminal device based on the first indication information, the N groups of sidelink resources used for transmission of the SL-PRS. When the terminal device has the SL-PRS to be transmitted, the terminal device may send the SL-PRS to the network device on a pre-configured group of sidelink resources, to implement transmission of the SL-PRS, improve transmission efficiency of the SL-PRS, and ensure positioning precision. In addition, when the N groups of sidelink resources belong to resources in the SL-PRS dedicated resource pool, the sidelink resources may be activated or deactivated based on the fields such as the SL-PRS field, the SL-PRS resource identifier field, and the comb size field. In this way, an existing field may be reused to activate a resource, and a new field does not need to be used, to reduce signaling overheads.

Step 405: The terminal device activates or deactivates the first group of sidelink resources based on the first indication information.

Optionally, the terminal device may further determine a third group of sidelink resources in at least one group of activated sidelink resources in the N groups of sidelink resources, and send the SL-PRS on the third group of sidelink resources. A trigger condition for the terminal device to send the SL-PRS by and how the terminal device sends the SL-PRS are not limited in this application. Alternatively, refer to step 204. Details are not described herein again.

In an implementation, step 405 is an optional step.

Step 406: The terminal device sends second indication information. The second indication information indicates to confirm activation or deactivation of the first group of sidelink resources.

Correspondingly, the network device receives the second indication information.

In this application, the first indication information and the second indication information may be separately implemented, or may be implemented in combination. Herein, an example in which the first indication information and the second indication information are implemented in combination is used for description. If the first indication information and the second indication information are separately implemented, after the network device sends the first indication information, the terminal device may not send the second indication information; or before sending the second indication information, the terminal device may not depend on whether to receive the first indication information.

In an implementation, before sending the second indication information, the terminal device may trigger the second indication information.

In an implementation, the second indication information includes N bits, and the N bits are in one-to-one correspondence with the N groups of sidelink resources. When the second indication information indicates to confirm activation of the first group of sidelink resources, a value of a bit that is in the second indication information and that is corresponding to the first group of sidelink resources is a fifth value; or when the second indication information indicates to confirm deactivation of the first group of sidelink resources, a value of a bit that is in the second indication information and that is corresponding to the first group of sidelink resources is a sixth value. Optionally, the fifth value may be 1, and the sixth value may be 0.

In an implementation, the second indication information corresponds to one group of sidelink resources indicated by the first indication information. For example, if the first indication information indicates to activate the first group of sidelink resources, the second indication information indicates to confirm activation of the first group of sidelink resources. If the first indication information indicates to deactivate the first group of sidelink resources, the second indication information indicates to confirm deactivation of the first group of sidelink resources.

In an implementation, the second indication information corresponds to one group of sidelink resources indicated by a plurality of pieces of first indication information. For example, the network device indicates, via a 1^{st} piece of first indication information, to activate or deactivate the first group of sidelink resources, and the network device further indicates, via a 2^{nd} piece of first indication information, to activate or deactivate the second group of sidelink resources. In this case, the second indication information may further indicate to confirm activation or deactivation of the first group of sidelink resources and the second group of sidelink resources.

In an implementation, the second indication information may indicate to confirm activation or deactivation of the sidelink resource in the SL-PRS dedicated resource pool. This is understood as that the second indication information is confirmation information specially used for the sidelink resource in the SL-PRS dedicated resource pool.

For example, the network device indicates, via the first indication information, to activate or deactivate the sidelink resource corresponding to the SL-PRS dedicated resource pool, and the terminal device may indicate, via the second indication information, to confirm activation or deactivation of the sidelink resource corresponding to the SL-PRS dedicated resource pool.

For example, a value of N is 16. The network device configures 16 groups of sidelink resources for the terminal device. The 16 groups of sidelink resources include eight groups of sidelink resources corresponding to the shared resource pool and eight groups of sidelink resources corresponding to the SL-PRS dedicated resource pool. The eight groups of sidelink resources corresponding to the shared resource pool are numbered 1 to 8, and the eight groups of sidelink resources corresponding to the SL-PRS dedicated resource pool are numbered 1 to 8. The network device may indicate, via the first indication information, the terminal device to activate or deactivate the eight groups of sidelink resources corresponding to the SL-PRS dedicated resource pool. To enable the terminal device to indicate confirmation information related to the eight groups of sidelink resources corresponding to the SL-PRS dedicated resource pool, the terminal device may use the second indication information, so that the network device learns an activation or deactivation status of the eight groups of sidelink resources corresponding to the SL-PRS dedicated resource pool. For another example, a value of N is 8. The network device configures, for the terminal device, eight groups of sidelink resources corresponding to the SL-PRS dedicated resource pool. The network device may indicate, via the first indication information, the terminal device to activate or deactivate the eight groups of sidelink resources corresponding to the SL-PRS dedicated resource pool. To enable the terminal device to indicate confirmation information related to the eight groups of sidelink resources corresponding to the SL-PRS dedicated resource pool, the terminal device may use the second indication information, so that the network device learns an activation or deactivation status of the eight groups of sidelink resources corresponding to the SL-PRS dedicated resource pool.

In an implementation, the second indication information may indicate to confirm activation or deactivation of the sidelink resource corresponding to the SL-PRS dedicated resource pool and/or the sidelink resource corresponding to the shared resource pool. Alternatively, this is understood as that the second indication information is not confirmation information specially used for the sidelink resource corresponding to the SL-PRS dedicated resource pool, but indicates all resources of configured grant type 2 configured for the terminal device.

For example, the network device may indicate, via the first indication information, to activate or deactivate the sidelink resource corresponding to the SL-PRS dedicated resource pool, or may indicate, via the first indication information, to activate or deactivate the sidelink resource corresponding to the shared resource pool. In this case, the terminal device may indicate, via the second indication information, to confirm activation or deactivation of the sidelink resource corresponding to the SL-PRS dedicated resource pool or activation or deactivation of the sidelink resource corresponding to the shared resource pool.

For example, a value of N is 16. The network device configures 16 groups of sidelink resources for the terminal device. The 16 groups of sidelink resources include eight groups of sidelink resources corresponding to the shared resource pool and eight groups of sidelink resources corresponding to the SL-PRS dedicated resource pool. The eight groups of sidelink resources corresponding to the shared resource pool are numbered 1 to 8, and the eight groups of sidelink resources corresponding to the SL-PRS dedicated resource pool are numbered 9 to 16. The terminal device may use the second indication information, so that the network device learns of activation or deactivation statuses of all resources of configured grant type 2.

In an implementation, the second indication information may be a MAC CE, or the second indication information is carried in the MAC CE.

The second indication information may correspond to a new LCID, for example, may correspond to an index or a value of an LCID reserved in the protocol. "Reserved" may also be understood as "not used".

In an implementation, a value of the LCID corresponding to the second indication information is any one of 37 to 42 and 47.

In an implementation, a value of an extended logical channel identifier corresponding to the second indication information is any one of 64 to 292.

In an implementation, the second indication information may alternatively be a sidelink configured grant confirmation MAC CE (Sidelink Configured Grant Confirmation MAC CE). For example, the network device configures eight groups of sidelink resources for the terminal device. Four groups of sidelink resources corresponding to the shared resource pool are numbered 1 to 4, and four groups of sidelink resources corresponding to the SL-PRS dedicated resource pool are numbered 5 to 8. The terminal device enables, via the sidelink configured grant confirmation MAC CE, the network device to learn of activation and deactivation statuses of the eight groups of sidelink resources.

According to the methods provided in this application, when the network device schedules the N groups of sidelink resources for the terminal device to perform transmission of the SL-PRS, the terminal device may send the second indication information, so that the network device determines whether the terminal device successfully activates or deactivates the configured sidelink resource. This avoids a transmission conflict caused when the network device deactivates a group of sidelink resources for the terminal device but the terminal device cannot deactivate the group of sidelink resources and continues using the group of sidelink resources, or avoids a resource waste caused when the network device activates a group of sidelink resources for the terminal device but the terminal device cannot activate the group of sidelink resources.

It may be understood that, to implement the functions in the foregoing embodiments, the network device and the terminal include corresponding hardware structures and/or software modules for performing the functions. A person skilled in the art should be easily aware that, in this application, the units and method steps in the examples described with reference to embodiments disclosed in this application can be implemented by using hardware or a combination of hardware and computer software. Whether a function is performed by hardware or hardware driven by computer software depends on particular application scenarios and design constraint conditions of the technical solutions.

This application further provides a communication apparatus. The communication apparatus may be configured to implement functions of the terminal device or the network device in the foregoing method embodiments, and therefore can also implement beneficial effects of the foregoing method embodiments. In embodiments of this application, the communication apparatus may be one of the terminals 120a to 120j shown in FIG. 1(a), or may be the network device 110a or 110b shown in FIG. 1(a), or may be a module (for example, a chip) used in the terminal device or the network device.

As shown in FIG. 5, a communication apparatus 500 includes a processing unit 510 and a transceiver unit 520. The communication apparatus 500 is configured to implement functions of the terminal device or the network device in the method embodiment shown in FIG. 2, FIG. 3, or FIG. 4.

When the communication apparatus 500 is configured to implement the functions of the terminal device,
the transceiver unit is configured to: if a resource is available for transmission of first request information, send the first request information, where the first request information is used to request a resource for transmission of a sidelink positioning reference signal SL-PRS, and the first request information indicates bandwidth information of the resource for transmission of the SL-PRS and/or identification information of a terminal device that receives the SL-PRS; and
the processing unit is configured to: if no resource is available for transmission of the first request information, trigger a second scheduling request, where the second scheduling request is used to request an uplink resource, and the uplink resource is used for transmission of the first request information; or the second scheduling request is used to request a resource for transmission of the SL-PRS.

When the communication apparatus 500 is configured to implement the functions of the terminal device in the method embodiment shown in FIG. 2,
the processing unit is configured to receive first information via the transceiver unit, where the first information indicates at least one first resource, and the first resource is used for transmission of a first scheduling request SR; and
the transceiver unit is configured to send the first SR to a network device on the first resource, where the first SR is used to request a second resource for transmission of a sidelink positioning reference signal SL-PRS, and the SL-PRS is used for sidelink positioning.

When the communication apparatus 500 is configured to implement the functions of the network device in the method embodiment shown in FIG. 2,
the processing unit is configured to send first information to a terminal device via the transceiver unit, where the first information indicates at least one first resource, and the first resource is used for transmission of a first scheduling request SR; and
the transceiver unit is configured to receive the first SR from the terminal device on the first resource, where the first SR is used to request a second resource for transmission of a sidelink positioning reference signal SL-PRS, and the SL-PRS is used for sidelink positioning.

When the communication apparatus 500 is configured to implement the functions of the terminal device in the method embodiment shown in FIG. 3,
the processing unit is configured to: determine to send a sidelink positioning reference signal SL-PRS; and if no resource is available for transmission of the SL-PRS, trigger first request information; and
the transceiver unit is configured to: if a resource is available for transmission of the first request information, send the first request information, where the first request information is used to request a resource for transmission of the SL-PRS; or if no resource is available for transmission of the first request information, trigger a second scheduling request, where the second scheduling request is used to request an uplink resource.

When the communication apparatus 500 is configured to implement the functions of the network device in the method embodiment shown in FIG. 3,
the transceiver unit is configured to receive first request information or a second scheduling request from a terminal device, where the first request information is used to request a resource for transmission of a sidelink positioning reference signal SL-PRS, and the second scheduling request is used to request an uplink resource; and
a processing unit is configured to: send a second sidelink grant to the terminal device based on the first request information, or send a third sidelink grant to the terminal device based on the second scheduling request, where the second sidelink grant indicates a resource used for transmission of the SL-PRS, and the third sidelink grant indicates an uplink resource or a sidelink resource.

When the communication apparatus 500 is configured to implement the functions of the terminal device in the method embodiment shown in FIG. 4,
the transceiver unit is configured to receive first indication information, where the first indication information indicates to activate or deactivate a first group of sidelink resources in N groups of periodic sidelink resources, the first group of sidelink resources are used for transmission of a sidelink reference signal SL-PRS, N is an integer greater than 0, and the N groups of sidelink resources are configured by a network device; and
the processing unit is configured to activate or deactivate the first group of sidelink resources based on the first indication information.

When the communication apparatus 500 is configured to implement the functions of the network device in the method embodiment shown in FIG. 4,
the processing unit is configured to determine to activate or deactivate a first group of sidelink resources in N groups of periodic sidelink resources, the N groups of sidelink resources are configured by a network device, the first group of sidelink resources are used for transmission of a sidelink reference signal SL-PRS, and N is an integer greater than 0; and
the transceiver unit is configured to send the first indication information, where the first indication information indicates to activate or deactivate the first group of sidelink resources in the N groups of periodic sidelink resources.

For more detailed descriptions about the processing unit 510 and the transceiver unit 520, directly refer to the related descriptions in the method embodiments shown in the foregoing procedures. Details are not described herein again.

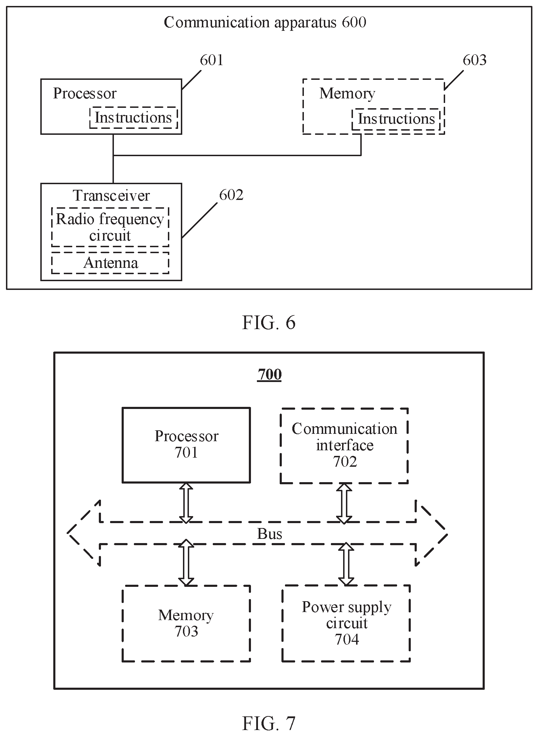

In another possible product form, the terminal device or the network device in embodiments of this application may be implemented by using a general bus architecture. For ease of description, FIG. 6 is a diagram of a structure of a communication apparatus 600 according to an embodiment of this application. The communication apparatus 600 includes a processor 601 and a transceiver 602. The communication apparatus 600 may be a terminal device, or a chip or a chip system in the terminal device; or the communication apparatus 600 may be a network device, or a chip or a module in the network device. FIG. 6 shows only main parts of the communication apparatus 600. In addition to the processor 601 and the transceiver 602, the communication apparatus 600 may further include a memory 603 and an input/output apparatus (not shown in the figure).

Optionally, the processor 601 is mainly configured to: process a communication protocol and communication data, control the entire communication apparatus, execute a software program, and process data of the software program. The memory 603 is mainly configured to store the software program and the data. The transceiver 602 may include a radio frequency circuit and an antenna. The radio frequency circuit is mainly configured to: perform conversion between a baseband signal and a radio frequency signal, and process the radio frequency signal. The antenna is mainly configured to receive/send a radio frequency signal in a form of an electromagnetic wave. The input/output apparatus, for example, a touchscreen, a display, or a keyboard, is mainly configured to: receive data input by a user, and output data to the user.

Optionally, the processor 601, the transceiver 602, and the memory 603 may be connected through a communication bus.

After the communication apparatus is powered on, the processor 601 may read the software program in the memory 603, interpret and execute instructions of the software program, and process the data of the software program. When data needs to be sent wirelessly, the processor 601 performs baseband processing on the to-be-sent data, and outputs a baseband signal to the radio frequency circuit. The radio frequency circuit performs radio frequency processing on the baseband signal, and sends a radio frequency signal in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 601. The processor 601 converts the baseband signal into data and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

In some embodiments, in terms of hardware implementation, a person skilled in the art may figure out that the communication apparatus 500 may be in a form of the communication apparatus 600 shown in FIG. 6.

In an example, functions/implementation processes of the processing unit 510 in FIG. 5 may be implemented by the processor 601 in the communication apparatus 600 shown in FIG. 6 by invoking computer-executable instructions stored in the memory 603. Functions/implementation processes of the transceiver unit 520 in FIG. 5 may be implemented by the transceiver 602 in the communication apparatus 600 shown in FIG. 6.

In another possible product form, the terminal device or the network device in this application may use a composition structure shown in FIG. 7, or include parts shown in FIG. 7. FIG. 7 is a diagram of composition of a communication apparatus 700 according to this application.

As shown in FIG. 7, the communication apparatus 700 includes at least one processor 701. Optionally, the communication apparatus further includes a communication interface 702.

When related program instructions are executed in the at least one processor 701, the apparatus 700 may be caused to implement the method provided in any one of the foregoing embodiments and any possible design thereof. Alternatively, the processor 701 is configured to implement, by using a logic circuit or by executing code instructions, the method provided in any one of the foregoing embodiments and any possible design thereof.

The communication interface 702 may be configured to: receive the program instructions, and transmit the program instructions to the processor. Alternatively, the communication interface 702 may be configured to perform communication interaction between the communication apparatus 700 and another communication device, for example, exchange control signaling and/or service data. For example, the communication interface 702 may be configured to: receive a signal from an apparatus other than the communication apparatus 700, and transmit the signal to the processor 701, or send a signal from the processor 701 to a communication apparatus other than the communication apparatus 700.

Optionally, the communication interface 702 may be a code and/or data read/write interface circuit, or the communication interface 702 may be a signal transmission interface circuit between a communication processor and a transceiver, or may be a pin of a chip.

Optionally, the communication apparatus 700 may further include at least one memory 703. The memory 703 may be configured to store the related program instructions and/or data that are/is needed. It should be noted that the memory 703 may exist independent of the processor 701, or may be integrated with the processor 701. The memory 703 may be located inside the communication apparatus 700, or may be located outside the communication apparatus 700. This is not limited.

Optionally, the communication apparatus 700 may further include a power supply circuit 704. The power supply circuit 704 may be configured to supply power to the processor 701. The power supply circuit 704 may be located in a same chip as the processor 701, or may be located in a chip other than a chip in which the processor 701 is located.

Optionally, the communication apparatus 700 may further include a bus, and parts of the communication apparatus 700 may be interconnected through the bus.

In some embodiments, in terms of hardware implementation, a person skilled in the art may figure out that the communication apparatus 500 shown in FIG. 5 may be in a form of the communication apparatus 700 shown in FIG. 7.

In an example, functions/implementation processes of the processing unit 510 in FIG. 5 may be implemented by the processor 701 in the communication apparatus 700 shown in FIG. 7 by invoking computer-executable instructions stored in the memory 703. Functions/implementation processes of the transceiver unit 520 in FIG. 5 may be implemented by the communication interface 702 in the communication apparatus 700 shown in FIG. 7.

It should be noted that the structure shown in FIG. 7 does not constitute a specific limitation on the terminal device or the network device. For example, in some other embodiments of this application, the terminal device or the network device may include more or fewer parts than those shown in the figure, or combine some parts, or split some parts, or have different part arrangements. The parts shown in the figure may be implemented by hardware, software, or a combination of software and hardware.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware part, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in the network device or the terminal. Certainly, the processor and the storage medium may alternatively exist in the network device or the terminal as discrete components.

All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer programs or instructions. When the computer program or the instructions are loaded and executed on a computer, all or a part of the procedures or functions in embodiments of this application are performed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A communication method, comprising:
if a resource is available for transmission of first request information, sending the first request information, wherein the first request information is used to request a resource for transmission of a sidelink positioning reference signal SL-PRS, and the first request information indicates bandwidth information of the resource for transmission of the SL-PRS and/or identification information of a terminal device that receives the SL-PRS; or
if no resource is available for transmission of the first request information, triggering a second scheduling request, wherein the second scheduling request is used to request an uplink resource, and the uplink resource is used for transmission of the first request information; or the second scheduling request is used to request a resource for transmission of the SL-PRS.

2. The method according to claim 1, wherein the method further comprises:
triggering the first request information.

3. The method according to claim 1 or 2, wherein the method further comprises:
determining to send the SL-PRS.

4. The method according to claim 1, wherein after the sending the first request information, the method further comprises:
canceling the triggered first request information.

5. The method according to claim 1 or 2, wherein the method further comprises:
receiving resource indication information from a network device, wherein the resource indication information indicates a sidelink resource; and
if the sidelink resource indicated by the resource indication information is capable of carrying the SL-PRS, canceling the triggered first request information.

6. The method according to any one of claims 1 to 5, wherein
the SL-PRS is an aperiodic SL-PRS.

7. The method according to any one of claims 1 to 6, wherein
a value of a logical channel identifier LCID corresponding to the first request information is any one of 64 to 292.

8. The method according to any one of claims 1 to 7, wherein
a priority of the first request information is higher than a priority of a sidelink buffer status report.

9. The method according to any one of claims 1 to 8, comprising:
receiving configuration information of the second scheduling request, wherein the configuration information comprises identification information of the second scheduling request SR.

10. A communication method, comprising:
receiving first information, wherein the first information indicates at least one first resource, and the first resource is used for transmission of a first scheduling request SR; and
sending the first SR to a network device on the first resource, wherein the first SR is used to request a second resource for transmission of a sidelink positioning reference signal SL-PRS, and the SL-PRS is used for sidelink positioning.

11. The method according to claim 10, wherein the first information further indicates one or more of the following:
SL-PRS resource pool information corresponding to each of the at least one first resource;
SL-PRS bandwidth information corresponding to each of the at least one first resource;
information about a quantity of symbols for an SL-PRS corresponding to each of the at least one first resource; or
location service requirement information corresponding to each of the at least one first resource.

12. The method according to claim 11, wherein the SL-PRS resource pool information, SL-PRS bandwidth information, the information about the quantity of symbols for the SL-PRS, and the location service requirement information corresponding to any two of the at least one first resource are not completely identical.

13. The method according to claim 11, wherein the method further comprises:
determining, in the at least one first resource based on the SL-PRS, the first resource used to send the first SR, wherein
the SL-PRS and the first resource used to send the first SR meet at least one of the following:
a resource pool to which the resource used for transmission of the SL-PRS belongs is the same as a resource pool indicated by the SL-PRS resource pool information corresponding to the first resource;
a bandwidth required for a location service corresponding to the SL-PRS is less than or equal to a bandwidth indicated by the SL-PRS bandwidth information corresponding to the first resource;
a quantity of symbols required for the location service corresponding to the SL-PRS is less than or equal to a quantity of symbols that is indicated by the information about the quantity of symbols for the SL-PRS corresponding to the first resource; or
location service requirement information required for the location service corresponding to the SL-PRS is the same as the location service requirement information corresponding to the first resource.

14. The method according to any one of claims 10 to 13, wherein the method further comprises:
receiving a first sidelink grant from the network device, wherein the first sidelink grant indicates the second resource; and
sending the SL-PRS on the second resource indicated by the first sidelink grant.

15. The method according to any one of claims 1 to 14, wherein that the first information indicates the first resource comprises:
the first information indicates one or more of the following:
time domain information of the first resource;
frequency domain information of the first resource;
identification information of the first SR;
resource identification information of the first resource;
periodicity information of the first resource;
symbol offset information of the first resource; or
slot offset information of the first resource.

16. The method according to any one of claims 11 to 15, wherein before the receiving the first information, the method further comprises:
sending second information to the network device, wherein the second information indicates one or more of the following: bandwidth information required for the location service, information about the quantity of symbols required for the location service, positioning quality of service of the location service, or an identifier of the location service.

17. The method according to any one of claims 10 to 16, wherein before the sending the first SR to the network device on the first resource, the method further comprises:
if determining that no resource is available for transmission of the SL-PRS, triggering the first SR.

18. The method according to claim 17, wherein after the sending the first SR to the network device on the first resource, the method further comprises:
canceling the triggered first SR.

19. The method according to claim 18, wherein the method further comprises:
receiving resource indication information from the network device, wherein the resource indication information indicates a third resource used for transmission of data; and
if the third resource is capable of carrying the data and the SL-PRS, canceling the triggered first SR.

20. A communication method, comprising:
sending first information to a terminal device, wherein the first information indicates at least one first resource, and the first resource is used for transmission of a first scheduling request SR; and
receiving the first SR from the terminal device on the first resource, wherein the first SR is used to request a second resource for transmission of a sidelink positioning reference signal SL-PRS, and the SL-PRS is used for sidelink positioning.

21. The method according to claim 20, wherein the first information further indicates one or more of the following:
SL-PRS resource pool information corresponding to each of the at least one first resource;
SL-PRS bandwidth information corresponding to each of the at least one first resource;
information about a quantity of symbols for the SL-PRS corresponding to each of the at least one first resource; or
location service requirement information corresponding to each of the at least one first resource.

22. The method according to claim 21, wherein the SL-PRS resource pool information, the SL-PRS bandwidth information, the information about the quantity of symbols for the SL-PRS, and the SL-PRS location service requirement information corresponding to any two of the at least one first resource are not completely identical.

23. The method according to claim 21, wherein the SL-PRS and the first resource used to send the first SR meet at least one of the following:
a resource pool to which the resource used for transmission of the SL-PRS belongs is the same as a resource pool indicated by the SL-PRS resource pool information corresponding to the first resource;
a bandwidth required for a location service corresponding to the SL-PRS is less than or equal to a bandwidth indicated by the SL-PRS bandwidth information corresponding to the first resource;
a quantity of symbols required for the location service corresponding to the SL-PRS is less than or equal to a quantity of symbols that is indicated by the information about the quantity of symbols for the SL-PRS corresponding to the first resource; or
location service requirement information required for the location service corresponding to the SL-PRS is the same as the SL-PRS location service requirement information corresponding to the first resource.

24. The method according to any one of claims 20 to 23, wherein the method further comprises:
sending a first sidelink grant to the terminal device based on the first SR, wherein the first sidelink grant indicates the second resource.

25. The method according to any one of claims 20 to 24, wherein that the first information indicates the first resource comprises:
the first information indicates one or more of the following:
time domain information of the first resource;
frequency domain information of the first resource;
identification information of the first SR;
resource identification information of the first resource;
periodicity information of the first resource;
symbol offset information of the first resource; or
slot offset information of the first resource.

26. The method according to claim 21, wherein before the sending the first information, the method further comprises:
receiving second information, wherein the second information indicates one or more of the following: bandwidth information required for the location service, information about the quantity of symbols required for the location service, positioning quality of service of the location service, or an identifier of the location service.

27. The method according to claim 26, wherein the method further comprises:
determining, based on the second information, at least one of the following information corresponding to each of the at least one first resource:
the SL-PRS resource pool information, the SL-PRS bandwidth information, the information about the quantity of symbols for the SL-PRS, or the location service requirement information.

28. A communication method, comprising:
determining to send a sidelink positioning reference signal SL-PRS; and
if no resource is available for transmission of the SL-PRS, triggering first request information;
if a resource is available for transmission of the first request information, sending the first request information, wherein the first request information is used to request a resource for transmission of the SL-PRS; or
if no resource is available for transmission of the first request information, triggering a second scheduling request, wherein the second scheduling request is used to request an uplink resource.

29. The method according to claim 28, wherein the first request information indicates one or more of the following:
positioning quality of service QoS corresponding to the SL-PRS;
an index of a location service corresponding to the SL-PRS;
an identifier of the location service corresponding to the SL-PRS;
a size of the SL-PRS;
bandwidth information of a resource used for transmission of the SL-PRS;
information about a quantity of symbols of the resource used for transmission of the SL-PRS; or
identification information of a terminal device that receives the SL-PRS.

30. The method according to claim 28 or 29, wherein the method further comprises:
receiving a second sidelink grant, wherein the second sidelink grant indicates a resource used for transmission of the SL-PRS; and
performing transmission of the SL-PRS on the resource indicated by the second sidelink grant.

31. The method according to any one of claims 28 to 30, wherein after the sending the first request information, the method further comprises:
canceling the triggered first request information.

32. The method according to claim 28 or 31, wherein the method further comprises:
receiving resource indication information from the network device, wherein the resource indication information indicates a resource used for transmission of data; and
if the resource indicated by the resource indication information is capable of carrying the data and the SL-PRS, canceling the triggered first request information.

33. A communication method, comprising:
receiving first request information or a second scheduling request from a terminal device, wherein the first request information is used to request a resource for transmission of a sidelink positioning reference signal SL-PRS, and the second scheduling request is used to request an uplink resource; and
sending a second sidelink grant to the terminal device based on the first request information, or sending a third sidelink grant to the terminal device based on the second scheduling request, wherein the second sidelink grant indicates a resource used for transmission of the SL-PRS, and the third sidelink grant indicates a sidelink resource.

34. The method according to claim 33, wherein the first request information indicates one or more of the following:
positioning quality of service QoS corresponding to the SL-PRS;
an index of a location service corresponding to the SL-PRS;
an identifier of the location service corresponding to the SL-PRS;
a size of the SL-PRS;
bandwidth information of a resource used for transmission of the SL-PRS;
information about a quantity of symbols of the resource used for transmission of the SL-PRS; or
identification information of a terminal device that receives the SL-PRS.

35. A communication method, comprising:
receiving first indication information, wherein the first indication information indicates to activate or deactivate a first group of sidelink resources in N groups of periodic sidelink resources, the first group of sidelink resources are used for transmission of a sidelink reference signal SL-PRS, N is an integer greater than 0, and the N groups of sidelink resources are configured by a network device; and
activating or deactivating the first group of sidelink resources based on the first indication information.

36. The method according to claim 35, wherein the method further comprises:
the first indication information comprises X bits, wherein X is an integer greater than 0; and
if a value of the X bits is a first value, the first indication information indicates to activate the first group of sidelink resources; or
if a value of the X bits is a second value, the first indication information indicates to deactivate the first group of sidelink resources.

37. The method according to claim 36, wherein
the first indication information further comprises an index of the first group of sidelink resources.

38. The method according to claim 36 or 37, wherein
if the first group of sidelink resources are resources in a shared resource pool, the first indication information is scrambled with a first radio network temporary identity RNTI; or
if the first group of sidelink resources are resources in an SL-PRS dedicated resource pool, the first indication information is scrambled with a second RNTI, wherein the first RNTI is different from the second RNTI.

39. The method according to any one of claims 36 to 38, wherein
if the first group of sidelink resources are the resources in the SL-PRS dedicated resource pool, the first indication information is carried in DCI in a first format; or
if the first group of sidelink resources are the resources in the shared resource pool, the first indication information is carried in DCI in a second format, wherein the first format is different from the second format.

40. A communication method, comprising:
determining to activate or deactivate a first group of sidelink resources in N groups of periodic sidelink resources, the N groups of sidelink resources are configured by a network device, the first group of sidelink resources are used for transmission of a sidelink reference signal SL-PRS, and N is an integer greater than 0; and
sending the first indication information, wherein the first indication information indicates to activate or deactivate the first group of sidelink resources in the N groups of periodic sidelink resources.

41. A communication apparatus, comprising:
a transceiver unit, configured to: if a resource is available for transmission of first request information, send the first request information, wherein the first request information is used to request a resource for transmission of a sidelink positioning reference signal SL-PRS, and the first request information indicates bandwidth information of the resource for transmission of the SL-PRS and/or identification information of a terminal device that receives the SL-PRS; and
a processing unit, configured to: if no resource is available for transmission of the first request information, trigger a second scheduling request, wherein the second scheduling request is used to request an uplink resource, and the uplink resource is used for transmission of the first request information; or the second scheduling request is used to request a resource for transmission of the SL-PRS.

42. A communication apparatus, comprising:
a processing unit, configured to send first information to a terminal device using a transceiver unit, wherein the first information indicates at least one first resource, and the first resource is used for transmission of a first scheduling request SR; and
the transceiver unit, configured to receive the first SR from the terminal device on the first resource, wherein the first SR is used to request a second resource for transmission of a sidelink positioning reference signal SL-PRS, and the SL-PRS is used for sidelink positioning.

43. A communication apparatus, comprising:
a processing unit, configured to: determine to send a sidelink positioning reference signal SL-PRS; and if no resource is available for transmission of the SL-PRS, trigger first request information; and
a transceiver unit, configured to: if a resource is available for transmission of the first request information, send the first request information, wherein the first request information is used to request a resource for transmission of the SL-PRS; or if no resource is available for transmission of the first request information, trigger a second scheduling request, wherein the second scheduling request is used to request an uplink resource.

44. A communication apparatus, comprising:
a transceiver unit, configured to receive first request information or a second scheduling request from a terminal device, wherein the first request information is used to request a resource for transmission of a sidelink positioning reference signal SL-PRS, and the second scheduling request is used to request an uplink resource; and
a processing unit, configured to: send a second sidelink grant to the terminal device based on the first request information, or send a third sidelink grant to the terminal device based on the second scheduling request, wherein the second sidelink grant indicates a resource used for transmission of the SL-PRS, and the third sidelink grant indicates an uplink resource or a sidelink resource.

45. A communication apparatus, comprising:
a transceiver unit, configured to receive first indication information, wherein the first indication information indicates to activate or deactivate a first group of sidelink resources in N groups of periodic sidelink resources, the first group of sidelink resources are used for transmission of a sidelink reference signal SL-PRS, N is an integer greater than 0, and the N groups of sidelink resources are configured by a network device; and
a processing unit, configured to activate or deactivate the first group of sidelink resources based on the first indication information.

46. A communication apparatus, comprising:
a processing unit, configured to determine to activate or deactivate a first group of sidelink resources in N groups of periodic sidelink resources, the N groups of sidelink resources are configured by a network device, the first group of sidelink resources are used for transmission of a sidelink reference signal SL-PRS, and N is an integer greater than 0; and
a transceiver unit, configured to send the first indication information, wherein the first indication information indicates to activate or deactivate the first group of sidelink resources in the N groups of periodic sidelink resources.

47. A communication apparatus, comprising a processor and a memory, wherein
the processor is configured to execute a computer program or instructions stored in the memory, to cause the communication apparatus to implement the method according to any one of claims 1 to 40.

48. A computer-readable storage medium, storing a computer program or instructions, wherein when the computer program or the instructions are run on a computer, the computer is caused to implement the method according to any one of claims 1 to 40.

49. A chip, comprising a processor, wherein the processor is coupled to a memory, and is configured to execute a computer program or instructions stored in the memory, to cause the chip to implement the method according to any one of claims 1 to 40.

50. A computer program product, wherein when a computer reads and executes the computer program product, the method according to any one of claims 1 to 40 is performed.
